# EUROPEAN PATENT SPECIFICATION

(11) **EP 4 055 944 B1**
(45) Date of publication and mention of the grant of the patent: **26.02.2025**
(21) Application number: 20804356.2
(22) Date of filing: 04.11.2020
(51) Int. Cl.: H04W 72/04, H04L 5/00, H04B 7/08

(54) **UPDATING ACTIVE TCI STATE FOR SINGLE-PDCCH BASED MULTI-TRP PDSCH OR MULTI-PDCCH BASED MULTI-TRP PDSCH**
AKTUALISIERUNG DES AKTIVEN TCI-STATUS FÜR EINZEL-PDCCH-BASIERTEN MULTI-TRP-PDSCH ODER MULTI-PDCCH-BASIERTEN MULTI-TRP-PDSCH
MISE À JOUR D'ÉTAT DE TCI ACTIF POUR PDSCH MULTI-TRP BASÉ SUR UN SEUL PDCCH OU PDSCH MULTI-TRP BASÉ SUR DE MULTIPLES PDCCH

(30) Priority: 08.11.2019 US 201962933049 P
(43) Date of publication of application: 14.09.2022
(73) Proprietor: Telefonaktiebolaget LM Ericsson (publ), 164 83 Stockholm (SE)
(72) Inventor: MURUGANATHAN, Siva, Stittsville, Ontario K2S 0R3 (CA); FRENNE, Mattias, 754 43 Uppsala (SE); GAO, Shiwei, Nepean, Ontario K2J 0H5 (CA); MÄÄTTÄNEN, Helka-Liina, 00510 Helsinki (FI)
(74) Representative: Ericsson
(86) International application number: PCT/IB2020/060371
(87) International publication number: WO 2021/090204

(56) References cited:
- WO-A1-2021/006662
- ZTE: "Enhancements on Multi-TRP and Multi-panel Transmission", vol. RAN WG1, no. Chongqing, China; 20191014 - 20191020, 5 October 2019 (2019-10-05), XP051808478, Retrieved from the Internet <URL:https://ftp.3gpp.org/tsg_ran/WG1_RL1/TSGR1_98b/Docs/R1-1910284.zip> [retrieved on 20191005]
- "5G; NR; Medium Access Control (MAC) protocol specification (3GPP TS 38.321 version 15.3.0 Release 15)", vol. 3GPP RAN, no. V15.3.0, 28 September 2018 (2018-09-28), pages 1 - 77, XP014330483, Retrieved from the Internet <URL:http://www.etsi.org/deliver/etsi_ts/138300_138399/138321/15.03.00_60/ts_138321v150300p.pdf> [retrieved on 20180928]
- ETSI ETSI 3GPP: "3GPP TS 38.214 version 15.3.0 Release 15", 1 October 2018 (2018-10-01), XP055767408, Retrieved from the Internet <URL:https://www.etsi.org/deliver/etsi_ts/138200_138299/138214/15.03.00_60/ts_138214v150300p.pdf> [retrieved on 20210121]
- MCC SUPPORT: "Draft Report of 3GPP TSG RAN WG1 #98bis v0.1.0 (Chongqing, China, 14th - 20th October 2019)", vol. RAN WG1, no. Reno, USA; 20191118 - 20191122, 23 October 2019 (2019-10-23), XP051798974, Retrieved from the Internet <URL:https://ftp.3gpp.org/tsg_ran/WG1_RL1/TSGR1_98b/Report/Draft_Minutes_report_RAN1%2398b_v010.zip> [retrieved on 20191023]

## Description

### Related Applications

This application claims the benefit of provisional patent application serial number 62/933,049, filed November 8, 2019.

### Technical Field

The present disclosure relates to a cellular communications system and, in particular, activation and deactivation of transmission configuration indication states in a cellular communications system.

### Background

The new generation mobile wireless communication system (5G) or New Radio (NR) supports a diverse set of use cases and a diverse set of deployment scenarios. NR uses Cyclic Prefix Orthogonal Frequency Division Multiplexing (CP-OFDM) in the downlink (i.e. from a network node, gNB, eNB, or base station, to a user equipment or UE) and both CP-OFDM and Discrete Fourier Transform (DFT) -spread Orthogonal Frequency Division Multiplexing (OFDM) (DFT-S-OFDM) in the uplink (i.e. from UE to gNB). In the time domain, NR downlink and uplink physical resources are organized into equally-sized subframes of 1 millisecond (ms) each. A subframe is further divided into multiple slots of equal duration.

The slot length depends on subcarrier spacing. For subcarrier spacing of Δ*f = 15kHz,* there is only one slot per subframe and each slot always consists of 14 OFDM symbols, irrespectively of the subcarrier spacing.

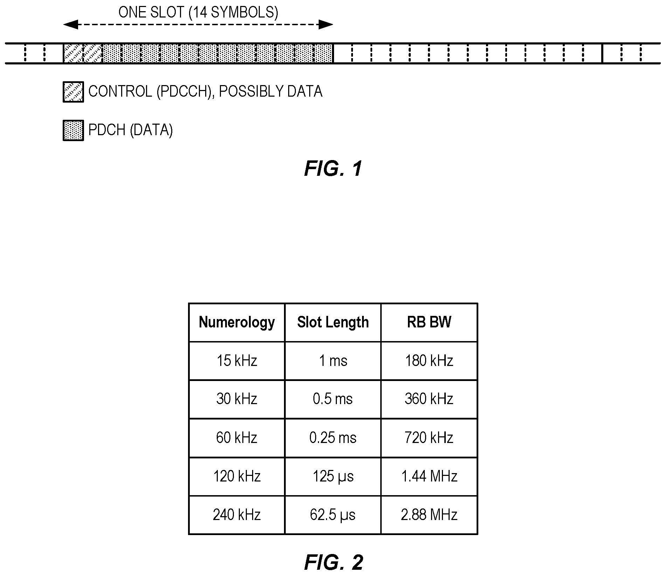

Typical data scheduling in NR are per slot basis. An example of the NR time-domain structure with 15 kHz subcarrier spacing is shown in Figure 1 where the first two symbols contain Physical Downlink Control Channel (PDCCH) and the remaining twelve symbols contains a Physical Data Channel (PDCH), which is either a Physical Downlink Shared Channel (PDSCH), which is a physical downlink data channel, or a Physical Uplink Shared Channel (PUSCH), which is a physical uplink data channel.

Different subcarrier spacing values are supported in NR. The supported subcarrier spacing values, which are also referred to as different numerologies, are given by Δ*f* = (15 × 2*^{α}*) *kHz* where *α* is a non-negative integer. Δ*f =* 15*kHz* is the basic subcarrier spacing that is also used in Long Term Evolution (LTE). The slot durations at different subcarrier spacings are shown in Figure 2.

In the frequency domain physical resource definition, a system bandwidth is divided into Resource Blocks (RBs), each corresponding to twelve contiguous subcarriers. The Common RBs (CRBs) are numbered starting with 0 from one end of the system bandwidth. The UE is configured with one or up to four Bandwidth Parts (BWPs) which may be a subset of the RBs supported on a carrier. Hence, a BWP may start at a CRB larger than zero. All configured BWPs have a common reference, which is CRB 0. Hence, a UE can be configured with a narrow BWP (e.g. 10 MHz) and a wide BWP (e.g. 100 MHz), but only one BWP can be active for the UE at a given point in time. The Physical RBs (PRBs) are numbered from 0 to N-1 within a BWP, but the 0:th PRB may thus be the K:th CRB where K>0.

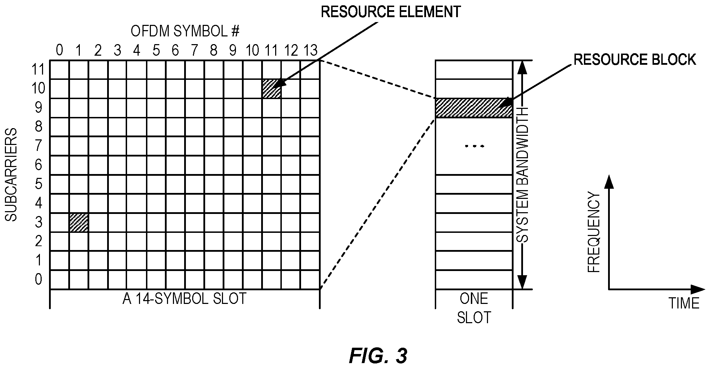

The basic NR physical time-frequency resource grid is illustrated in Figure 3, where only one RB within a 14-symbol slot is shown. One OFDM subcarrier during one OFDM symbol interval forms one Resource Element (RE).

Downlink transmissions can be dynamically scheduled, i.e., in each slot the gNB transmits Downlink Control Information (DCI) over Physical Downlink Control Channel (PDCCH) about which UE data is to be transmitted to and which RBs in the current downlink slot the data is transmitted on. PDCCH is typically transmitted in the first one or two OFDM symbols in each slot in NR. The UE data is carried on PDSCH. A UE first detects and decodes PDCCH and, if the decoding of PDCCH is successful, it then decodes the corresponding PDSCH based on the decoded control information in the PDCCH.

Uplink data transmission can also be dynamically scheduled using PDCCH. Similar to downlink, a UE first decodes uplink grants in PDCCH and then transmits data over PUSCH based the decoded control information in the uplink grant such as modulation order, coding rate, uplink resource allocation, etc.

Several signals can be transmitted from the same base station antenna from different antenna ports. These signals can have the same large-scale properties, for instance in terms of Doppler shift/spread, average delay spread, or average delay, when measured at the receiver. These antenna ports are then said to be quasi co-located (QCL).

The network can then signal to the UE that two antenna ports are QCL. If the UE knows that two antenna ports are QCL with respect to a certain parameter (e.g. Doppler spread), the UE can estimate that parameter based on a reference signal transmitted one of the antenna ports and use that estimate when receiving another reference signal or physical channel the other antenna port. Typically, the first antenna port is represented by a measurement reference signal such as Channel State Information Reference Signal (CSI-RS) (known as a source Reference Signal (RS)) and the second antenna port is a Demodulation Reference Signal (DMRS) (known as target RS) for PDSCH or PDCCH reception.

For instance, if antenna ports A and B are QCL with respect to average delay, the UE can estimate the average delay from the signal received from antenna port A (known as the source RS) and assume that the signal received from antenna port B (target RS) has the same average delay. This is useful for demodulation since the UE can know beforehand the properties of the channel when trying to measure the channel utilizing the DMRS, which may help the UE in for instance selecting an appropriate channel estimation filter.

Information about what assumptions can be made regarding QCL is signaled to the UE from the network. In NR, four types of QCL relations between a transmitted source RS and transmitted target RS were defined:
- **Type A:** {Doppler shift, Doppler spread, average delay, delay spread}
- **Type B:** {Doppler shift, Doppler spread}
- **Type C:** {average delay, Doppler shift}
- **Type D:** {Spatial Rx parameter}

QCL type D was introduced to facilitate beam management with analog beamforming and is known as spatial QCL. There is currently no strict definition of spatial QCL, but the understanding is that if two transmitted antenna ports are spatially QCL, the UE can use the same receive (Rx) beam to receive them. This is helpful for a UE that use analog beamforming to receive signals, since the UE needs to adjust its Rx beam in some direction prior to receiving a certain signal. If the UE knows that the signal is spatially QCL with some other signal it has received earlier, then it can safely use the same Rx beam to receive also this signal. Note that for beam management, the discussion mostly revolves around QCL Type D, but it is also necessary to convey a Type A QCL relation for the RSs to the UE, so that it can estimate all the relevant large-scale parameters.

Typically, this is achieved by configuring the UE with a CSI-RS for tracking (TRS) for time/frequency offset estimation. To be able to use any QCL reference, the UE would have to receive it with a sufficiently good Signal to Interference plus Noise Ratio (SINR). In many cases, this means that the TRS has to be transmitted in a suitable beam to a certain UE.

To introduce dynamics in beam and Transmission/Reception Point (TRP) selection, the UE can be configured through Radio Resource Control (RRC) signaling with MTCI states, where Mis up to 128 in frequency range 2 (FR2) for the purpose of PDSCH reception and up to 8 in frequency range 1 (FR1), depending on UE capability.

Each TCI state contains QCL information, i.e. one or two source downlink (DL) RSs, each source RS associated with a QCL type. For example, a TCI state contains a pair of reference signals, each associated with a QCL type, e-g- two different CSI-RSs {CSI-RS1, CSI-RS2} is configured in the TCI state as {qcl-Type1,qcl-Type2} = {Type A, Type D}. This means the UE can derive Doppler shift, Doppler spread, average delay, delay spread from CSI-RS1 and Spatial Rx parameter (i.e. the RX beam to use) from CSI-RS2.

Each of the *M* states in the list of TCI states can be interpreted as a list of M possible beams transmitted from the network or a list of *M* possible_TRPs used by the network to communicate with the UE. The *M* TCI states can also be interpreted as a combination of one or multiple beams transmitted from one or multiple TRPs.

A first list of available TCI states is configured for PDSCH, and a second list of TCI states is configured for PDCCH. Each TCI state contains a pointer, known as TCI State ID, which points to the TCI state. The network then activates, via Medium Access Control (MAC) Control Element (CE), one TCI state for PDCCH (i.e. provides a TCI for PDCCH) and up to eight TCI states for PDSCH. The number of active TCI states the UE supports is a UE capability, but the maximum is eight.

Each configured TCI state contains parameters for the quasi co-location associations between source reference signals (CSI-RS or Synchronization Signal (SS)/Physical Broadcast Channel (PBCH)) and target reference signals (e.g., PDSCH/PDCCH DMRS ports). TCI states are also used to convey QCL information for the reception of CSI-RS.

Assume a UE is configured with four active TCI states from a list of sixty-four (64) configured TCI states. Hence, sixty (60) TCI states are inactive for this particular UE (but some may be active for another UE) and the UE need not be prepared to have large scale parameters estimated for those. But the UE continuously tracks and updates the large-scale parameters for the four active TCI states by measurements and analysis of the source RSs indicated by each TCI state. When scheduling a PDSCH to a UE, the DCI contains a pointer to one active TCI. The UE then knows which large-scale parameter estimate to use when performing PDSCH DMRS channel estimation and thus PDSCH demodulation.

DMRS (also denoted herein as "DM-RS") are used for coherent demodulation of physical layer data channels, PDSCH (DL) and PUSCH (UL), as well as coherent demodulation of PDCCH. The DMRS is confined to resource blocks carrying the associated physical layer channel and is mapped on allocated resource elements of the OFDM time-frequency grid such that the receiver can efficiently handle time/frequency-selective fading radio channels.

The mapping of DMRS to resource elements is configurable in terms of density in both the frequency and time domains, with two mapping types in the frequency domain (configuration type 1 or type 2) and two mapping types in the time domain (mapping type A or type B) defining the symbol position of the first DMRS within a transmission interval. The DMRS mapping in time domain can further be single-symbol based or double-symbol based where the latter means that DMRS is mapped in pairs of two adjacent symbols. Furthermore, a UE can be configured with one, two, three, or four single-symbol DMRS and one or two double-symbol DMRS. In scenarios with low Doppler, it may be sufficient to configure front-loaded DMRS only, i.e. one single-symbol DMRS or one double-symbol DMRS, whereas in scenarios with high Doppler additional DMRS will be required.

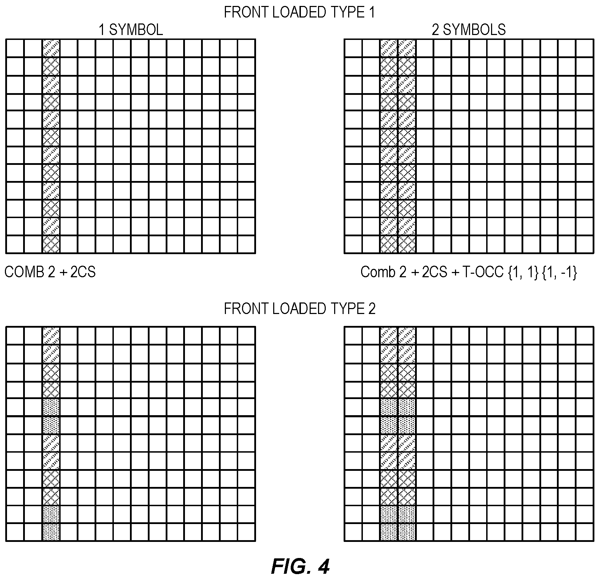

Figure 4 shows the mapping of front-loaded DMRS for configuration type 1 and type 2 with single-symbol and double-symbol DMRS and for the mapping type A with first DMRS in third symbol of a transmission interval of 14 symbols. CDM groups are indicted by different hashing/fill patterns. We observe from this figure that type 1 and type 2 differs with respect to both the mapping structure and the number of supported DMRS CDM groups where type 1 support 2 CDM groups and Type 2 support 3 CDM groups.

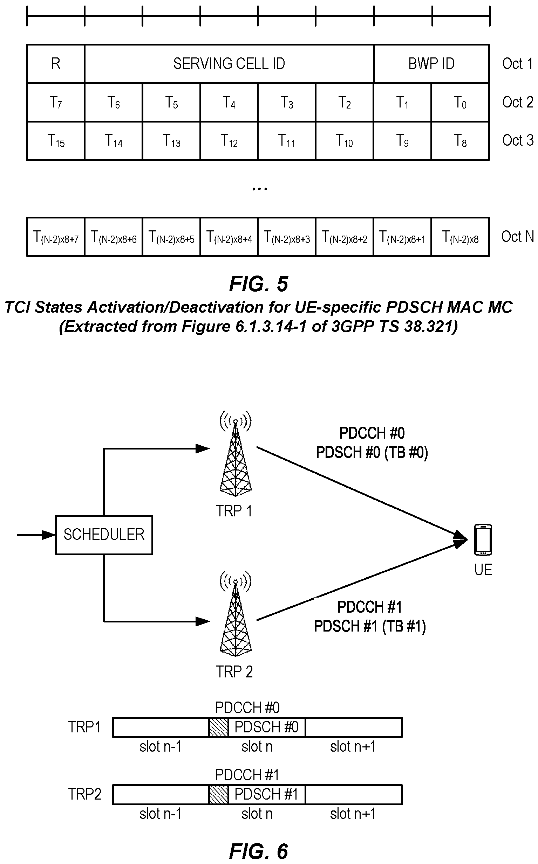

In regard to Transmission Configuration Indicator (TCI) state activation/deactivation for UE-specific PDSCH via MAC CE, details of the MAC CE signaling that is used to activate/deactivate TCI states for UE specific PDSCH are provided. The structure of the MAC CE for activating/deactivating TCI states for UE specific PDSCH is given in Figure 5.

As shown in Figure 5, the MAC CE contains the following fields:
- Serving Cell ID: This field indicates the identity of the Serving Cell for which the MAC CE applies. The length of the field is 5 bits;
- BWP ID: This field contains the ID corresponding to a downlink bandwidth part for which the MAC CE applies. The BWP ID is given by the higher layer parameter *BWP-Id* as specified in 3GPP TS 38.331 V15.7.0. The length of the BWP ID field is 2 bits since a UE can be configured with up to 4 BWPs for DL;
- A variable number of fields *Tᵢ*: If the UE is configured with a TCI state with TCI State ID *i,* then the field *Tᵢ* indicates the activation/deactivation status of the TCI state with TCI State ID *i.* If the UE is not configured with a TCI state with TCI State ID *i,* the MAC entity shall ignore the *Tᵢ* field. The *Tᵢ* field is set to "1" to indicate that the TCI state with TCI State ID *i* shall be activated and mapped to the codepoint of the DCI *Transmission Configuration Indication* field, as specified in 3GPP TS 38.214 V15.7.0. The *Tᵢ* field is set to "0" to indicate that the TCI state with TCI State ID *i* shall be deactivated and is not mapped to the codepoint of the DCI *Transmission Configuration Indication* field. It should be noted that the codepoint to which the TCI State is mapped is determined by the ordinal position among all the TCI States with *Tᵢ* field set to "1". That is the first TCI State with *Tᵢ* field set to "1" shall be mapped to the codepoint value 0 of DCI *Transmission Configuration Indication* field, the second TCI State with *Tᵢ* field set to "1" shall be mapped to the codepoint value 1 of DCI *Transmission Configuration Indication* field, and so on. In NR Rel-15, the maximum number of activated TCI states is 8;
- A Reserved bit R: this bit is set to '0' in NR Rel-15.

Note that the TCI States Activation/Deactivation for UE-specific PDSCH MAC CE is identified by a MAC Protocol Data Unit (PDU) subheader with logical channel ID (LCID) as specified in Table 6.2.1-1 of 3GPP TS 38.321 (this table is reproduced below in Table 1). The MAC CE for Activation/Deactivation of TCI States for UE-specific PDSCH has variable size.

**Table 1 Values of LCID for DL-SCH (Extracted from Table 6.2.1-1 of 3GPP TS 38.321)**

| **Index** | **LCID values** |
|---|---|
| 0 | CCCH |
| 1-32 | Identity of the logical channel |
| 33-46 | Reserved |
| 47 | Recommended bit rate |
| 48 | SP ZP CSI-RS Resource Set Activation/Deactivation |
| 49 | PUCCH spatial relation Activation/Deactivation |
| 50 | SP SRS Activation/Deactivation |
| 51 | SP CSI reporting on PUCCH Activation/Deactivation |
| 52 | TCI State Indication for UE-specific PDCCH |
| 53 | TCI States Activation/Deactivation for UE-specific PDSCH |
| 54 | Aperiodic CSI Trigger State Subselection |
| 55 | SP CSI-RS / CSI-IM Resource Set Activation/Deactivation |
| 56 | Duplication Activation/Deactivation |
| 57 | SCell Activation/Deactivation (four octet) |
| 58 | SCell Activation/Deactivation (one octet) |
| 59 | Long DRX Command |
| 60 | DRX Command |
| 61 | Timing Advance Command |
| 62 | UE Contention Resolution Identity |
| 63 | Padding |

Non-coherent Joint Transmission (NC-JT) refers to Multiple Input Multiple Output (MIMO) data transmission over multiple TRPs or panels in which different MIMO layers are transmitted over different TRPs. Two ways of scheduling NC-JT multi-TRP transmission are specified in NR Rel-16: multi-PDCCH based multi-TRP transmission and single-PDCCH based multi-TRP transmission.

In regard to multi-PDCCH based multi-TRP transmission, an example is shown in Figure 6, where data is sent to a UE over two TRPs, each TRP carrying one Transport Block (TB) mapped to one code word. When the UE has four receive antennas while each of the TRPs has only two transmit antennas, the UE can support up to four MIMO layers but each TRP can maximally transmit two MIMO layers. In this case, by transmitting data over two TRPs to the UE, the peak data rate to the UE can be increased as up to four aggregated layers from the two TRPs can be used. This is beneficial when the traffic load, and thus the resource utilization, is low in each TRP. In this example, a single scheduler is used to schedule data over the two TRPs. One PDCCH is transmitted from each of the two TRPs in a slot, each schedule one PDSCH. This is referred to as a multi-PDCCH or multi-DCI scheme in which a UE receives two PDCCHs and the associated two PDSCHs in a slot from two TRPs.

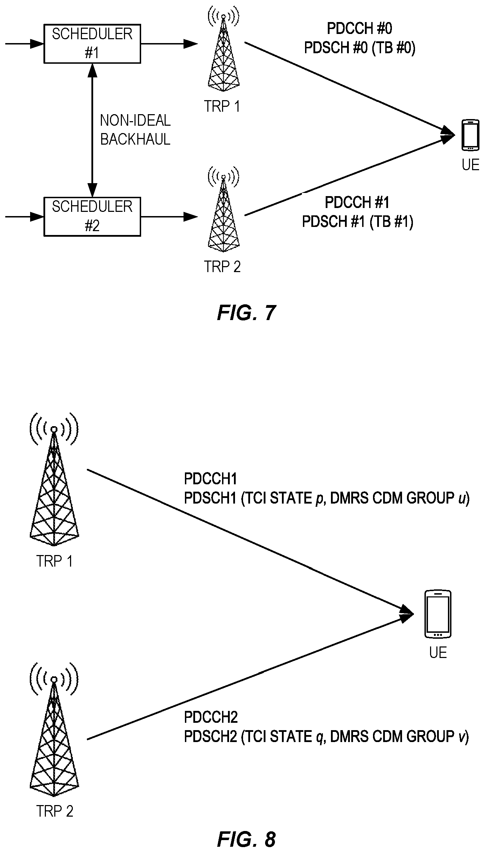

In another scenario shown in Figure 7, independent schedulers are used in each TRP. In this case, only semi-static to semi-dynamic coordination between the two schedulers can be done due the non-ideal backhaul, i.e., backhaul with large delay and/or delay variations which are comparable to the cyclic prefix length or in some cases even longer, up to several milliseconds.

In NR specification 3GPP TS 38.211, there is a restriction stating:
The UE may assume that the PDSCH DM-RS within the same CDM group are quasi co-located with respect to Doppler shift, Doppler spread, average delay, delay spread, and spatial Rx.

In cases where a UE is not scheduled all DMRS ports within a CDM group, there may be another UE simultaneously scheduled using the remaining ports of that CDM group. The UE can then estimate the channel for that other UE (thus an interfering signal) in order to perform coherent interference suppression. Hence, this is useful in Multi-User MIMO (MU-MIMO) scheduling and UE interference suppression.

In case of a multi-TRP scenario in which the UE receives PDSCHs via multiple PDCCHs transmitted from different TRPs, the signals transmitted from different TRPs will most likely not be quasi-collocated, as the TRPs may be spatially separated. In this case, the PDSCHs transmitted from different TRPs will have different TCI states associated with them. Furthermore, according to the above restriction, two PDSCH DMRSs associated with two TRPs will have to belong to different DMRS CDM groups (as the two PDSCH DMRSs are not QCL, they cannot belong to the same DMRS CDM group). Figure 8 illustrates an example relationship between TCI states and DMRS CDM groups for a multiple-PDCCH multi-TRP scenario. In the example, PDSCH1 is associated with TCI State *p,* and PDSCH 2 is associated with TCI state *q.* The PDSCH DMRSs from the different TRPs also belong to different DMRS CDM groups as they are not quasi-collocated. In the example, the DMRS for PDSCH1 belongs to CDM group *u* while the DMRS for PDSCH2 belongs to CDM group v.

In RAN1#96, the following agreement was made:

### Agreement

To support multiple-PDCCH based multi-TRP/panel transmission with intra-cell (same cell ID) and inter-cell (different Cell IDs), following RRC configuration can be used to link multiple PDCCH/PDSCH pairs with multiple TRPs
- one CORESET in a "PDCCH-config" corresponds to one TRP
- FFS whether to increase the number of CORESETs per "PDCCH-config" more than 3
- FFS: UE monitoring/decoding behavior for multiple PDCCHs.

According to the above underlined part in the agreement, a CORESET is used to differentiate between TRPs. That is, one CORESET corresponds to one of the TRPs and another CORESET corresponds to the second TRP. Note that there is one 'PDCCH-config' per dedicated downlink BWP. In RAN1#97, the following was further agreed:

### Agreement

*For multi-PDCCH based multi-TRP operation, increase the maximum number of CORESETs per "PDCCH-config" to 5, according to UE capability*
- FFS: How to define capability per TRP
- Study whether enhancement of reducing PDCCH blocking rate, e.g. Hash function enhancement, and UE complexity is needed, e.g. taking into account overbooking PDCCH candidates and blind detection reduction per TRP/CORESET group.

According to the above underlined and italicized part in the agreement, the number of CORESETs per 'PDCCH-config' was increased to five from three (note that three is the limit for NR Rel-15) in order to flexibly assign 2-3 CORESETs per TRP. Furthermore, in RAN1#97, it was agreed to introduce a higher layer index per CORSET in order to pool or group the CORESETs. The CORESETs with the same higher layer index value belongs to the same CORESET pool and corresponds to one TRP.

Hence, in NR Rel-16, for multi-TRP PDSCH transmission with multiple PDCCHs, one or multiple CORESET pools (configured via a higher layer index per CORESET) may be configured for a UE. A CORESET pool consists of one or more CORESETs.

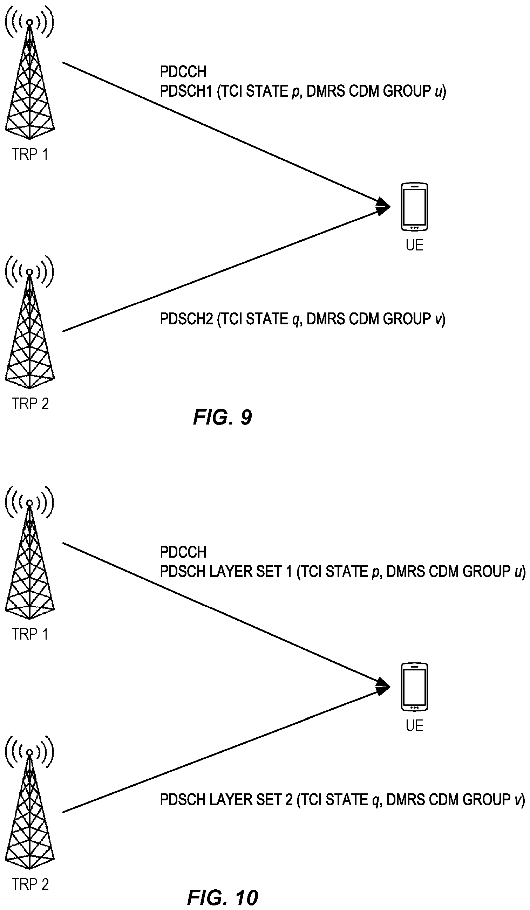

For single-PDCCH based multi-TRP transmission, the single PDCCH is received from one of the TRPs while PDSCH(s) will be received from both TRPs. Figure 9 shows an example where a DCI received by the UE in PDCCH from TRP1 schedules two PDSCHs. The first PDSCH (PDSCH1) is received from TRP1, and the second PDSCH (PDSCH2) is received from TRP2. Even though Figure 9 shows two PDSCHs being scheduled by a single-PDCCH, the single PDCCH scheme is also applicable for the case where different PDSCH layer sets belonging to the same PDSCH are received from the two TRPs. This is illustrated in the example of Figure 10, where PDSCH layer set 1 is received from TRP1, and PDSCH layer set 2 is received from TRP2.

In such cases, each PDSCH or PDSCH layer set transmitted from a different TRP has a different TCI state associated with it. In the examples of Figure 9 and Figure 10, PDSCH1 and PDSCH layer set 1 are associated with TCI State *p*, and PDSCH2 and PDSCH layer set 2 are associated with TCI state q. The PDSCH DMRSs from the different TRPs may belong to different DMRS CDM groups. In the example of Figure 9, the DMRS for PDSCH1 belongs to CDM group *u* while the DMRS for PDSCH2 belongs to CDM group v.

In the RAN1 AdHoc meeting in January 2019, the following is agreed:

### Agreement

TCI indication framework shall be enhanced in Rel-16 at least for eMBB:
- Each TCI code point in a DCI can correspond to 1 or 2 TCI states
   ∘ When 2 TCI states are activated within a TCI code point, each TCI state corresponds to one CDM group, at least for DMRS type 1
      ▪ FFS design for DMRS type 2
      ▪ FFS: TCI field in DCI, and associated MAC-CE signaling impact

According to the above agreement, each codepoint in the DCI *Transmission Configuration Indication* field can be mapped to either one or two TCI states. This can be interpreted as follows: A DCI in PDCCH schedules one or two PDSCHs or PDSCH layer sets with each PDSCH or PDSCH layer set associated with a different TCI state; the codepoint of the *Transmission Configuration Indication* field in DCI indicates the 1-2 TCI states associated with the one or two PDSCHs scheduled. Additionally, according to the above agreement, at least for DMRS type 1, PDSCH DMRS associated with one TCI state is contained within one DMRS CDM group.

There currently exist certain challenge(s). As discussed above, in the NR Rel-15 MAC CE for TCI States Activation/Deactivation for UE-specific PDSCH, a single codepoint of the DCI *Transmission Configuration Indication* field can only be mapped to a single TCI State. Hence, the NR Rel-15 MAC CE for TCI States Activation/Deactivation for UE-specific PDSCH cannot be used for single-PDCCH based multi-TRP where one codepoint in the DCI *Transmission Configuration Indication* field needs to be mapped to either one or two TCI states. Furthermore, in NR Rel-16, the MAC CE for TCI states Activation/Deactivation for UE-specific PDSCH should also support multi-PDCCH based multi-TRP transmission. Hence, it is an open problem how to use MAC CE for TCI state activation for PDSCH considering both single-PDCCH based multi-PDSCH scheduling and multiple-PDCCH based multi-PDSCH scheduling needs to be supported.

Document "Enhancements on Multi-TRP and Multi-panel Transmission", ZTE, 3GPP draft, R1-1910284, discloses an evaluation of how to enhance multiple TRP/panel transmission. Inter alia, the following proposals were made. Proposal 2: For NCJT transmission which is based on single PDCCH, at least support entries listed in Table 2.1-1 in the case when dmrs-Type=1, maxLength=2 and support entries listed in Table 2.1-2 in the case when dmrs-Type=2, maxLength=2: port 2 (for 1st TCI), 0, 1 (for 2nd TCI) are supported for 1+2 layers. Proposal 3: When two TCI states are indicated by TCI codepoint in DCI, a new DMRS table is used. When single TCI state is indicated by TCI codepoint in DCI, the Rel-15 DMRS table is used. In the new table: DMRS ports corresponding to two CDM groups indicated by each entry are mapped to two TCI states respectively. The mapping between CDM group and TCI state can be different in different entries. Proposal 4: Support two DL PTRS ports: the maximum number of PTRS ports should be the same as the number of indicated TCI states. Proposal 5: For single PDCCH design, if the offset between the reception of the DL DCI and the corresponding PDSCH is less than the threshold timeDurationForQCL, the default QCL assumption of PDSCH should be enhanced: support two default TCI states which are used for the two DMRS groups of PDSCH respectively if the offset between the DL DCI and the PDSCH is less than the threshold. Proposal 14: The maximum number of MAC-CE activated TCI states should be increased to 16. Proposal 17: For scheme 3, the number of intra-slot repetitions is the same as the number of DCI indicated TCI states. Proposal 19: For scheme 3 and 4: the first half PDSCH repetitions are associated with the first TCI state in DCI-indicated TCI codepoint, and the second half PDSCH repetitions are associated with the second TCI state in DCI-indicated TCI codepoint; and support Rel-15 RV sequences for PDSCH repetitions with the same TCI state, predefine the RV relationship between the first PDSCH repetitions of two TRP, RV codepoint is to indicate the RV value of the first PDSCH repetition which is associated with the first TCI state. Proposal 20: Support dynamic switching among single TRP, scheme 1a, 2a, 2b and 3: if one TCI state is indicated by TCI codepoint, it is single TRP transmission and Rel-15 DMRS table is used; and if two TCI states are indicated by TCI codepoint, it is multi-TRP/panel transmission and a new DMRS table is used, different entry sets in the new DMRS table can represent scheme 1a, 2a, 2b and 3.

Document 3GPP TS 38.321 V15.3.0 relates to the NR MAC protocol. The TCI States Activation/Deactivation for UE-specific PDSCH MAC CE is identified by a MAC PDU subheader with LCID. It has a variable size comprising the fields: serving Cell ID, this field indicates the identity of the Serving Cell for which the MAC CE applies, and the length of the field is 5 bits; and BWP ID, this field contains *BWP-Id* of a downlink bandwidth part for which the MAC CE applies, and the length of the BWP ID field is 2 bits.

Document 3GPP TS 38.214 V15.3.0 relates to characteristics of the physicals layer procedures of data channels for 5G-NR. The UE can be configured with a list of up to M TCI-State configurations within the higher layer parameter PDSCH-Config to decode PDSCH according to a detected PDCCH with DCI intended for the UE and the given serving cell, where M depends on the UE capability. Each TCI-State contains parameters for configuring a quasi co-location relationship between one or two downlink reference signals and the DM-RS ports of the PDSCH. The quasi co-location relationship is configured by the higher layer parameter qcl-Type1 for the first DL RS, and qcl-Type2 for the second DL RS (if configured).

Document "Draft Report of 3GPP TSG RAN WG1 #98bis v0.1.0", Chongqing, China, 14th - 20th October 2019, discloses a single MAC-CE to activate the same set of TCI states for multiple CCs. Further, when a set of TCI-state IDs for PDSCH are activated by a MAC CE for a set of CCs/BWPs at least for the same band, where the applicable list of CCs is indicated by RRC signalling, the same set of TCI-state IDs are applied for the all BWPs in the indicated CCs. Regarding questions on single PDCCH multi-TRP based operation, it is disclosed that each TCI codepoint can correspond to 1 or 2 TCI states.

Document WO 2021/006662 A1 constitutes prior art under Article 54(3) EPC and discloses a technique in which, in a wireless communication system, a user equipment (UE) transmits, to a base station (BS), UE capability information comprising whether the UE supports cooperative communication for receiving physical downlink shared channels (PDSCHs) from a plurality of transmission reception points (TRPs) in a particular time-frequency resource, obtains, via radio resource control (RRC), information about whether the cooperative communication is to be applied from the BS, identifies a format of a medium access control (MAC) control element (CE) received from the BS based on whether the BS is to apply the cooperative communication, and determines transmission configuration indication (TCI) states according to the respective TRPs, based on the identified format of the MAC CE.

### Summary

Systems and methods are disclosed herein for updating an active Transmission Configuration Indication (TCI) state for single Physical Downlink Control Channel (PDCCH) based or multi-PDCCH based multi-Transmission/Reception Point (TRP) Physical Downlink Shared Channel (PDSCH) transmissions.

According to the present disclosure, methods, computer-readable media, a wireless communication device and a network node according to the independent claims are provided. Developments are set forth in the dependent claims.

In one embodiment, a method performed by a wireless communication device in a cellular communications system comprises receiving, from a network node, a Medium Access Control (MAC) Control Element (CE) for TCI state activation or deactivation. The MAC CE comprises information that activates one or more TCI states for a particular serving cell and/or bandwidth part (BWP) of the wireless communication device where the particular serving cell and/or BWP is configured for multi-PDCCH based multi-PDSCH transmission and maps at most one of the one or more TCI states activated by the MAC CE to each of a plurality of codepoints for a Downlink Control information (DCI) transmission configuration indication field. The method further comprises receiving a PDCCH comprising a DCI in which the DCI transmission configuration field is set to a particular codepoint from among the plurality of codepoints for the DCI transmission configuration field and determining a TCI state from among the one or more TCI states activated by the MAC CE used for a PDSCH scheduled by the DCI based on the information comprised in the DCI that maps at most one of the one or more TCI states activated by the MAC CE to each of the plurality of codepoints for the DCI transmission configuration indication field. In this manner, a unified MAC CE design is provided for both single-PDCCH based scheduling and multi-PDCCH based scheduling.

In one embodiment, the PDSCH scheduled by the DCI is part of a multi-PDCCH based multi-PDSCH transmission.

In one embodiment, the method further comprises receiving the PDSCH scheduled by the DCI.

Corresponding embodiments of a wireless communication device are also disclosed. In one embodiment, a wireless communication device for a cellular communications system is adapted to receive, from a network node, a MAC CE for TCI state activation or deactivation. The MAC CE comprises information that activates one or more TCI states for a particular serving cell and/or BWP of the wireless communication device where the particular serving cell and/or BWP is configured for multi-PDCCH based multi-PDSCH transmission and maps at most one of the one or more TCI states activated by the MAC CE to each of a plurality of codepoints for a DCI transmission configuration indication field. The wireless communication device is further adapted to receive a PDCCH comprising a DCI in which the DCI transmission configuration field is set to a particular codepoint from among the plurality of codepoints for the DCI transmission configuration field and determine a TCI state from among the one or more TCI states activated by the MAC CE used for a PDSCH scheduled by the DCI based on the information comprised in the DCI that maps at most one of the one or more TCI states activated by the MAC CE to each of the plurality of codepoints for the DCI transmission configuration indication field.

In one embodiment, a wireless communication device for a cellular communications system comprises one or more transmitters, one or more receivers, and processing circuitry associated with the one or more transmitters and the one or more receivers. The processing circuitry is configured to cause the wireless communication device to receive, from a network node, a MAC CE for TCI state activation or deactivation. The MAC CE comprises information that activates one or more TCI states for a particular serving cell and/or BWP of the wireless communication device where the particular serving cell and/or BWP is configured for multi-PDCCH based multi-PDSCH transmission and maps at most one of the one or more TCI states activated by the MAC CE to each of a plurality of codepoints for a DCI transmission configuration indication field. The processing circuitry is further configured to cause the wireless communication device to receive a PDCCH comprising a DCI in which the DCI transmission configuration field is set to a particular codepoint from among the plurality of codepoints for the DCI transmission configuration field and determine a TCI state from among the one or more TCI states activated by the MAC CE used for a PDSCH scheduled by the DCI based on the information comprised in the DCI that maps at most one of the one or more TCI states activated by the MAC CE to each of the plurality of codepoints for the DCI transmission configuration indication field.

Embodiments of a method performed by a network node are also disclosed. In one embodiment, a method performed by a network node in a cellular communications system comprises transmitting or initiating transmission of, to a wireless communication device, a MAC CE for TCI state activation or deactivation. The MAC CE comprises information that activates one or more TCI states for a particular serving cell and/or BWP of the wireless communication device where the particular serving cell is configured for multi-PDCCH based multi-PDSCH transmission and maps at most one of the one or more TCI states activated by the MAC CE to each of a plurality of codepoints for a DCI transmission configuration indication field. The method further comprises transmitting or initiating transmission of a PDCCH to the wireless communication device, the PDCCH comprising a DCI in which the DCI transmission configuration field is set to a particular codepoint from among the plurality of codepoints for the DCI transmission configuration field that is mapped to a desired TCI state for a PDSCH scheduled by the DCI.

In one embodiment, the PDSCH scheduled by the DCI is part of a multi-PDCCH based multi-PDSCH transmission.

In one embodiment, the method further comprises transmitting or initiating transmission of the PDSCH scheduled by the DCI.

Corresponding embodiments of a network node are also disclosed. In one embodiment, a network node for a cellular communications system is adapted to transmit or initiate transmission of, to a wireless communication device, a MAC CE for TCI state activation or deactivation. The MAC CE comprises information that activates one or more TCI states for a particular serving cell and/or BWP of the wireless communication device where the particular serving cell and/or BWP is configured for multi-PDCCH based multi-PDSCH transmission and maps at most one of the one or more TCI states activated by the MAC CE to each of a plurality of codepoints for a DCI transmission configuration indication field. The network node is further adapted to transmit or initiate transmission of a PDCCH to the wireless communication device, the PDCCH comprising a DCI in which the DCI transmission configuration field is set to a particular codepoint from among the plurality of codepoints for the DCI transmission configuration field that is mapped to a desired TCI state for a PDSCH scheduled by the DCI.

In one embodiment, a network node for a cellular communications system comprises processing circuitry configured to cause the network node to transmit or initiate transmission of, to a wireless communication device, a MAC CE for TCI state activation or deactivation. The MAC CE comprises information that activates one or more TCI states for a particular serving cell and/or BWP of the wireless communication device where the particular serving cell and/or BWP is configured for multi-PDCCH based multi-PDSCH transmission and maps at most one of the one or more TCI states activated by the MAC CE to each of a plurality of codepoints for a DCI transmission configuration indication field. The processing circuitry is further configured to cause the network node to transmit or initiate transmission of a PDCCH to the wireless communication device, the PDCCH comprising a DCI in which the DCI transmission configuration field is set to a particular codepoint from among the plurality of codepoints for the DCI transmission configuration field that is mapped to a desired TCI state for a PDSCH scheduled by the DCI.

In another embodiment, a method performed by a wireless communication device in a cellular communications system comprises receiving, from a network node, a MAC CE for TCI state activation or deactivation. The MAC CE comprises information that activates one or more TCI states for a plurality of component carriers (CCs) comprised in a configured list of CCs for which simultaneous TCI state updates are enabled and maps at most X of the one or more TCI states activated by the MAC CE to each of a plurality of codepoints for a DCI transmission configuration indication field, where X is an integer greater than or equal to 1. The configured list of CCs only comprises CCs that have either multi-PDCCH based multi-PDSCH transmission enabled or single-PDCCH based single-PDSCH or multi-PDSCH transmission enabled.

In one embodiment, X=1. In another embodiment, X=2.

In one embodiment, the method further comprises receiving a PDCCH comprising a DCI in which the DCI transmission configuration field is set to a particular codepoint from among the plurality of codepoints for the DCI transmission configuration field, the PDCCH being a PDCCH for either a multi-PDCCH based multi-PDSCH transmission or a single-PDCCH based single-PDSCH or multi-PDSCH transmission on one or more of the plurality of CCs comprised in the configured list of CCs. The method further comprises determining at least one TCI state from among the one or more TCI states activated by the MAC CE used for at least one PDSCH scheduled by the DCI based on the information comprised in the DCI that maps at most one of the one or more TCI states activated by the MAC CE to each of the plurality of codepoints for the DCI transmission configuration indication field. In one embodiment, the at least one PDSCH scheduled by the DCI is part of a multi-PDCCH based multi-PDSCH transmission. In one embodiment, the method further comprises receiving the at least one PDSCH scheduled by the DCI.

In one embodiment, the method further comprises receiving, from a network node, the configured list of CCs for which simultaneous TCI state updates are enabled.

Corresponding embodiments of a wireless communication device are also disclosed. In one embodiment, a wireless communication device for a cellular communications system is adapted to receive, from a network node, a MAC CE for TCI state activation or deactivation. The MAC CE comprising information that activates one or more TCI states for a plurality of CCs comprised in a configured list of CCs for which simultaneous TCI state updates are enabled and maps at most X of the one or more TCI states activated by the MAC CE to each of a plurality of codepoints for a DCI transmission configuration indication field, where X is an integer greater than or equal to 1. The configured list of CCs only comprises CCs that have either multi-PDCCH based multi-PDSCH transmission enabled or single-PDCCH based single-PDSCH or multi-PDSCH transmission enabled.

In one embodiment, a wireless communication device for a cellular communications system comprises one or more transmitters, one or more receivers, and processing circuitry associated with the one or more transmitters and the one or more receivers. The processing circuitry is configured to cause the wireless communication device to receive, from a network node, a MAC CE for TCI state activation or deactivation. The MAC CE comprising information that activates one or more TCI states for a plurality of CCs comprised in a configured list of CCs for which simultaneous TCI state updates are enabled and maps at most X of the one or more TCI states activated by the MAC CE to each of a plurality of codepoints for a DCI transmission configuration indication field, where X is an integer greater than or equal to 1. The configured list of CCs only comprises CCs that have either multi-PDCCH based multi-PDSCH transmission enabled or single-PDCCH based single-PDSCH or multi-PDSCH transmission enabled.

In another embodiment, a method performed by a network node in a cellular communications system comprises transmitting or initiating transmission of, to a wireless communication device a MAC CE for TCI state activation or deactivation. The MAC CE comprises information that activates one or more TCI states for a plurality of CCs comprised in a configured list of CCs for which simultaneous TCI state updates are enabled and maps at most X of the one or more TCI states activated by the MAC CE to each of a plurality of codepoints for a DCI transmission configuration indication field, where X is an integer greater than or equal to 1. The configured list of CCs only comprises CCs that have either multi-PDCCH based multi-PDSCH transmission enabled or single-PDCCH based single-PDSCH or multi-PDSCH transmission enabled.

In one embodiment, X=1. In another embodiment, X=2.

In one embodiment, the method further comprises transmitting or initiating transmission of a PDCCH comprising a DCI in which the DCI transmission configuration field is set to a particular codepoint from among the plurality of codepoints for the DCI transmission configuration field. The PDCCH is a PDCCH for either a multi-PDCCH based multi-PDSCH transmission or a single-PDCCH based single-PDSCH or multi-PDSCH transmission on one or more of the plurality of CCs comprised in the configured list of CCs. The particular codepoint is mapped to at least one TCI state from among the one or more TCI states activated by the MAC CE used for at least one PDSCH scheduled by the DCI. In one embodiment, the at least one PDSCH scheduled by the DCI is part of a multi-PDCCH based multi-PDSCH transmission. In one embodiment, the method further comprises transmitting or initiating transmission of the at least one PDSCH scheduled by the DCI.

In one embodiment, the method further comprises transmitting or initiating transmission of, to the wireless communication device, the configured list of CCs for which simultaneous TCI state updates are enabled.

Corresponding embodiments of a network node are also disclosed. In one embodiment, a network node for a cellular communications system is adapted to transmit or initiate transmission of, to a wireless communication device, a MAC CE for TCI state activation or deactivation. The MAC CE comprises information that activates one or more TCI states for a plurality of CCs comprised in a configured list of CCs for which simultaneous TCI state updates are enabled and maps at most X of the one or more TCI states activated by the MAC CE to each of a plurality of codepoints for a DCI transmission configuration indication field, where X is an integer greater than or equal to 1. The configured list of CCs only comprises CCs that have either multi-PDCCH based multi-PDSCH transmission enabled or single-PDCCH based single-PDSCH or multi-PDSCH transmission enabled.

In one embodiment, a network node for a cellular communications system comprises processing circuitry configured to cause the network node to transmit or initiate transmission of, to a wireless communication device, a MAC CE for TCI state activation or deactivation. The MAC CE comprises information that activates one or more TCI states for a plurality of CCs comprised in a configured list of CCs for which simultaneous TCI state updates are enabled and maps at most X of the one or more TCI states activated by the MAC CE to each of a plurality of codepoints for a DCI transmission configuration indication field, where X is an integer greater than or equal to 1. The configured list of CCs only comprises CCs that have either multi-PDCCH based multi-PDSCH transmission enabled or single-PDCCH based single-PDSCH or multi-PDSCH transmission enabled.

In another embodiment, a method performed by a wireless communication device in a cellular communications system comprises receiving, from a network node, a MAC CE for TCI state activation or deactivation. The MAC CE comprises information that activates one or more TCI states and defines a codepoint to TCI state mapping, wherein the codepoint to TCI state mapping maps each of a plurality of codepoints for a DCI transmission configuration indication field to at most X of the one or more TCI states activated by the MAC CE, where X is an integer greater than or equal to 1. The MAC CE further comprises a control resource set (CORESET) pool identity (ID) that indicates that the one or more TCI states activated by the MAC CE and the codepoint to TCI state mapping defined by the information comprised in the MAC CE are to be applied to a PDCCH that is carried within any CORESET in a CORESET pool indicated by the CORESET pool ID. The method further comprises receiving a PDCCH carried within a CORESET in the CORESET pool indicated by the CORESET pool ID, the PDCCH comprising a DCI in which the DCI transmission configuration field is set to a particular codepoint from among the plurality of codepoints for the DCI transmission configuration field. The method further comprises determining a TCI state from among the one or more TCI states activated by the MAC CE used for a PDSCH scheduled by the DCI based on the information comprised in the DCI.

In one embodiment, X=1. In another embodiment, X=2.

In one embodiment, the PDSCH scheduled by the DCI is part of a multi-PDCCH based multi-PDSCH transmission.

In one embodiment, the method further comprises receiving the PDSCH scheduled by the DCI.

Corresponding embodiments of a wireless communication device are also disclosed. In one embodiment, a wireless communication device for a cellular communications system is adapted to receive, from a network node, a MAC CE for TCI state activation or deactivation. The MAC CE comprises information that activates one or more TCI states and defines a codepoint to TCI state mapping, wherein the codepoint to TCI state mapping maps each of a plurality of codepoints for a DCI transmission configuration indication field to at most X of the one or more TCI states activated by the MAC CE, where X is an integer greater than or equal to 1. The MAC CE further comprises a CORESET pool ID that indicates that the one or more TCI states activated by the MAC CE and the codepoint to TCI state mapping defined by the information comprised in the MAC CE are to be applied to a PDCCH that is carried within any CORESET in a CORESET pool indicated by the CORESET pool ID. The wireless communication device is further adapted to receive a PDCCH carried within a CORESET in the CORESET pool indicated by the CORESET pool ID, the PDCCH comprising a DCI in which the DCI transmission configuration field is set to a particular codepoint from among the plurality of codepoints for the DCI transmission configuration field. The wireless communication device is further adapted to determine a TCI state from among the one or more TCI states activated by the MAC CE used for a PDSCH scheduled by the DCI based on the information comprised in the DCI.

In one embodiment, a wireless communication device for a cellular communications system comprises one or more transmitters, one or more receivers, and processing circuitry associated with the one or more transmitters and the one or more receivers. The processing circuitry is configured to cause the wireless communication device to receive, from a network node, a MAC CE for TCI state activation or deactivation. The MAC CE comprises information that activates one or more TCI states and defines a codepoint to TCI state mapping, wherein the codepoint to TCI state mapping maps each of a plurality of codepoints for a DCI transmission configuration indication field to at most X of the one or more TCI states activated by the MAC CE, where X is an integer greater than or equal to 1. The MAC CE further comprises a CORESET pool ID that indicates that the one or more TCI states activated by the MAC CE and the codepoint to TCI state mapping defined by the information comprised in the MAC CE are to be applied to a PDCCH that is carried within any CORESET in a CORESET pool indicated by the CORESET pool ID. The processing circuitry is further configured to cause the wireless communication device to receive a PDCCH carried within a CORESET in the CORESET pool indicated by the CORESET pool ID, the PDCCH comprising a DCI in which the DCI transmission configuration field is set to a particular codepoint from among the plurality of codepoints for the DCI transmission configuration field. The processing circuitry is further configured to cause the wireless communication device to determine a TCI state from among the one or more TCI states activated by the MAC CE used for a PDSCH scheduled by the DCI based on the information comprised in the DCI.

In another embodiment, a method performed by a network node in a cellular communications system comprises transmitting or initiating transmission of a MAC CE for TCI state activation or deactivation to a wireless communication device. The MAC CE comprises information that activates one or more TCI states and defines a codepoint to TCI state mapping, wherein the codepoint to TCI state mapping maps each of a plurality of codepoints for a DCI transmission configuration indication field to at most X of the one or more TCI states activated by the MAC CE, where X is an integer greater than or equal to 1. The MAC CE further comprises a CORESET pool ID that indicates that the one or more TCI states activated by the MAC CE and the codepoint to TCI state mapping defined by the information comprised in the MAC CE are to be applied to a PDCCH that is carried within any CORESET in a CORESET pool indicated by the CORESET pool ID. The method further comprises transmitting or initiating transmission of a PDCCH carried within a CORESET in the CORESET pool indicated by the CORESET pool ID to the wireless communication device, the PDCCH comprising a DCI in which the DCI transmission configuration field is set to a particular codepoint from among the plurality of codepoints for the DCI transmission configuration field.

In one embodiment, X=1. In another embodiment, X=2.

In one embodiment, the PDSCH scheduled by the DCI is part of a multi-PDCCH based multi-PDSCH transmission.

In one embodiment, the method further comprises transmitting or initiating transmission of the PDSCH scheduled by the DCI.

Corresponding embodiments of a network node are also disclosed. In one embodiment, a network node for a cellular communications system is adapted to transmit or initiate transmission of a MAC CE for TCI state activation or deactivation to a wireless communication device. The MAC CE comprises information that activates one or more TCI states and defines a codepoint to TCI state mapping, wherein the codepoint to TCI state mapping maps each of a plurality of codepoints for a DCI transmission configuration indication field to at most X of the one or more TCI states activated by the MAC CE, where X is an integer greater than or equal to 1. The MAC CE further comprises a CORESET pool ID that indicates that the one or more TCI states activated by the MAC CE and the codepoint to TCI state mapping defined by the information comprised in the MAC CE are to be applied to a PDCCH that is carried within any CORESET in a CORESET pool indicated by the CORESET pool ID. The network node is further adapted to transmit or initiate transmission of a PDCCH carried within a CORESET in the CORESET pool indicated by the CORESET pool ID to the wireless communication device, the PDCCH comprising a DCI in which the DCI transmission configuration field is set to a particular codepoint from among the plurality of codepoints for the DCI transmission configuration field.

In one embodiment, a network node for a cellular communications system comprises processing circuitry configured to cause the network node to transmit or initiate transmission of a MAC CE for TCI state activation or deactivation to a wireless communication device. The MAC CE comprises information that activates one or more TCI states and defines a codepoint to TCI state mapping, wherein the codepoint to TCI state mapping maps each of a plurality of codepoints for a DCI transmission configuration indication field to at most X of the one or more TCI states activated by the MAC CE, where X is an integer greater than or equal to 1. The MAC CE further comprises a CORESET pool ID that indicates that the one or more TCI states activated by the MAC CE and the codepoint to TCI state mapping defined by the information comprised in the MAC CE are to be applied to a PDCCH that is carried within any CORESET in a CORESET pool indicated by the CORESET pool ID. The processing circuitry is further configured to cause the network node to transmit or initiate transmission of a PDCCH carried within a CORESET in the CORESET pool indicated by the CORESET pool ID to the wireless communication device, the PDCCH comprising a DCI in which the DCI transmission configuration field is set to a particular codepoint from among the plurality of codepoints for the DCI transmission configuration field.

### Brief Description of the Drawings

The accompanying drawing figures incorporated in and forming a part of this specification illustrate several aspects of the disclosure, and together with the description serve to explain the principles of the disclosure.
Figure 1 illustrates an example of the Third Generation Partnership Project (3GPP) New Radio (NR) time domain structure with 15 kilohertz (kHz) subcarrier spacing;
Figure 2 illustrates slot durations at different subcarrier spacings;
Figure 3 illustrates the basic NR physical time-frequency resource grid;
Figure 4 shows the mapping of front-loaded Demodulation Reference Signal (DMRS) for configuration type 1 and type 2 with single-symbol and double-symbol DMRS and for the mapping type A with first DMRS in third symbol of a transmission interval of fourteen symbols;
Figure 5 illustrates the Medium Access Control (MAC) Control Element (CE) structure for activating/deactivating Transmission Configuration Indication (TCI) states for User Equipment (UE) specific Physical Downlink Shared Channel (PDSCH) transmissions as defined in Release 15 of 3GPP Technical Specification (TS) 38.321;
Figure 6 illustrates an example of multi-Physical Downlink Control Channel (PDCCH) based multi-Transmission/Reception Point (TRP) transmission where data is sent to a UE over two TRPs, each TRP carrying one Transport Block (TB) mapped to one code word;
Figure 7 illustrate an example of a multi-PDCCH based multi-TRP transmission in which independent schedulers are used in each TRP;
Figure 8 illustrates an example relationship between TCI states and DMRS Code Division Multiplexing (CDM) groups for a multiple-PDCCH multi-TRP scenario;
Figure 9 shows an example where a Downlink Control Information (DCI) received by the UE in a PDCCH from a first TRP (TRP1) schedules two PDSCHs (i.e., a single-PDCCH based multi-TRP transmission);
Figure 10 illustrates an example of a single PDCCH scheme in which different PDSCH layer sets belonging to the same PDSCH are received from two TRPs;
Figure 11 illustrates one example of a cellular communications system in which embodiments of the present disclosure may be implemented;
Figure 12 illustrates an example of multi-PDCCH scheduling two different PDSCHs which are fully overlapping in time-frequency domain, in which case DMRS CDM groups 0 and 1 are used for PDSCHs 1 and 2 respectively;
Figure 13 illustrates another example of a multi-PDCCH scheduling where PDCCH1 schedules a single PDSCH (i.e., PDSCH 1) while PDCCH2 schedules two different PDSCHs (i.e., PDSCH 2 and PDSCH 3);
Figures 14 through 16 illustrate examples of a MAC CE for TCI state update in which a restriction is applied in accordance with a first embodiment of the present disclosure;
Figure 17 shows an example MAC CE where ten TCI state identifies (IDs) are indicated with described mappings to codepoints in the DCI Transmission Configuration Indication field in accordance with an embodiment of the present disclosure;
Figure 18 illustrates the operation of a network node and a UE in accordance with at least some aspects of the first embodiment of the present disclosure;
Figure 19 illustrates an example of a MAC CE for simultaneous TCI state update for a list of component carrier (CCs) in which a restriction is applied in accordance with a second embodiment of the present disclosure;
Figure 20 illustrates an example of a MAC CE for simultaneous TCI state update for multiple cells in which a restriction is applied in accordance with a second embodiment of the present disclosure;
Figure 21 illustrates the operation of a network node and a UE in accordance with at least some aspects of the second embodiment of the present disclosure;
Figure 22 illustrates the operation of a network node and a UE in accordance with at least some aspects of the third embodiment of the present disclosure;
Figures 23 through 25 are schematic block diagrams of example embodiments of a network node;
Figures 26 and 27 are schematic block diagrams of example embodiments of a wireless communication device;
Figure 28 illustrates an example embodiment of a communication system in which embodiments of the present disclosure may be implemented;
Figure 29 illustrates example embodiments of the host computer, base station, and UE of Figure 28; and
Figures 30 and 31 are flow charts that illustrate example embodiments of methods implemented in a communication system such as that of Figure 28.

### Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features, and advantages of the enclosed embodiments will be apparent from the following description.

**Radio Node:** As used herein, a "radio node" is either a radio access node or a wireless communication device.

**Radio Access Node:** As used herein, a "radio access node" or "radio network node" or "radio access network node" is any node in a Radio Access Network (RAN) of a cellular communications network that operates to wirelessly transmit and/or receive signals. Some examples of a radio access node include, but are not limited to, a base station (e.g., a New Radio (NR) base station (gNB) in a Third Generation Partnership Project (3GPP) Fifth Generation (5G) NR network or an enhanced or evolved Node B (eNB) in a 3GPP Long Term Evolution (LTE) network), a high-power or macro base station, a low-power base station (e.g., a micro base station, a pico base station, a home eNB, or the like), a relay node, a network node that implements part of the functionality of a base station (e.g., a network node that implements a gNB Central Unit (gNB-CU) or a network node that implements a gNB Distributed Unit (gNB-DU)) or a network node that implements part of the functionality of some other type of radio access node.

**Core Network Node:** As used herein, a "core network node" is any type of node in a core network or any node that implements a core network function. Some examples of a core network node include, e.g., a Mobility Management Entity (MME), a Packet Data Network Gateway (P-GW), a Service Capability Exposure Function (SCEF), a Home Subscriber Server (HSS), or the like. Some other examples of a core network node include a node implementing a Access and Mobility Function (AMF), a UPF, a Session Management Function (SMF), an Authentication Server Function (AUSF), a Network Slice Selection Function (NSSF), a Network Exposure Function (NEF), a Network Function (NF) Repository Function (NRF), a Policy Control Function (PCF), a Unified Data Management (UDM), or the like.

**Communication Device:** As used herein, a "communication device" is any type of device that has access to an access network. Some examples of a communication device include, but are not limited to: mobile phone, smart phone, sensor device, meter, vehicle, household appliance, medical appliance, media player, camera, or any type of consumer electronic, for instance, but not limited to, a television, radio, lighting arrangement, tablet computer, laptop, or Personal Computer (PC). The communication device may be a portable, hand-held, computer-comprised, or vehicle-mounted mobile device, enabled to communicate voice and/or data via a wireless or wireline connection.

**Wireless Communication Device:** One type of communication device is a wireless communication device, which may be any type of wireless device that has access to (i.e., is served by) a wireless network (e.g., a cellular network). Some examples of a wireless communication device include, but are not limited to: a User Equipment device (UE) in a 3GPP network, a Machine Type Communication (MTC) device, and an Internet of Things (IoT) device. Such wireless communication devices may be, or may be integrated into, a mobile phone, smart phone, sensor device, meter, vehicle, household appliance, medical appliance, media player, camera, or any type of consumer electronic, for instance, but not limited to, a television, radio, lighting arrangement, tablet computer, laptop, or PC. The wireless communication device may be a portable, hand-held, computer-comprised, or vehicle-mounted mobile device, enabled to communicate voice and/or data via a wireless connection.

**Network Node:** As used herein, a "network node" is any node that is either part of the radio access network or the core network of a cellular communications network/system.

Note that the description given herein focuses on a 3GPP cellular communications system and, as such, 3GPP terminology or terminology similar to 3GPP terminology is oftentimes used. However, the concepts disclosed herein are not limited to a 3GPP system.

Note that, in the description herein, reference may be made to the term "cell"; however, particularly with respect to 5G NR concepts, beams may be used instead of cells and, as such, it is important to note that the concepts described herein are equally applicable to both cells and beams.

Certain aspects of the present disclosure and their embodiments may provide solutions to the aforementioned or other challenges. In some embodiments (e.g., the set of embodiments referred to below as "Embodiment 1"), solutions are proposed on how to map Transmission Configuration Indicator (TCI) states to codepoints in the TCI field (e.g., maximum number of TCI states to be mapped to codepoints in TCI field) in Downlink Control Information (DCI) depending on whether the serving cell or Bandwidth Part (BWP) indicated in the Medium Access Control (MAC) Control Element (CE) is configured for multi-Physical Downlink Control Channel (PDCCH) based multi-Physical Downlink Shared Channel (PDSCH) reception or single-PDCCH based single PDSCH reception.

In some embodiments (e.g., the set of embodiments referred to below as "Embodiment 2"), solutions are proposed on how to efficiently map TCI states to codepoints in the TCI field for a plurality of serving cells or BWPs depending on whether at least one of the plurality of serving cells or bandwidth parts indicated in the MAC CE is configured for multi-PDCCH based multi-PDSCH reception or single-PDCCH based single PDSCH reception.

In some embodiments (e.g., the set of embodiments referred to below as "Embodiment 3"), solutions are proposed on how to simultaneously update TCI states for PDSCH for multiple TRPs by indicating the Control Resource Set (CORESET) pool index associated with each TRP within the MAC CE along with the corresponding TCI states to be activated.

Certain embodiments may provide one or more of the following technical advantage(s). Embodiments of the proposed solutions may provide a unified MAC CE design for both single-PDCCH based multi-PDSCH scheduling and multiple-PDCCH based multi-PDSCH scheduling which are both supported in NR Rel-16. A key benefit of this is that it makes multi-PDCCH based multi-TRP transmission suitable for DMRS type 1 which is the mandatory DMRS configuration in NR. Embodiments 2 and 3 provide efficient MAC CE signaling with reduced overhead since these embodiments allow TCI states to be simultaneously updated for multiple cells or multiple TRPs.

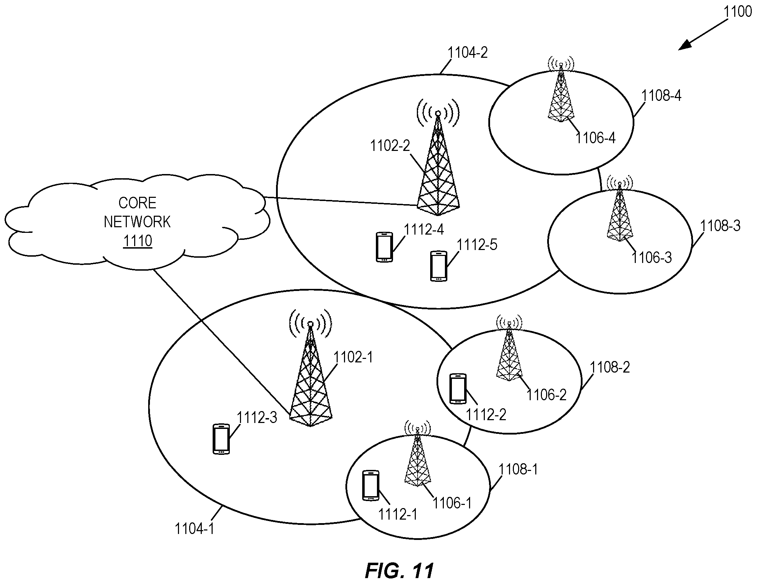

Figure 11 illustrates one example of a cellular communications system 1100 in which embodiments of the present disclosure may be implemented. In the embodiments described herein, the cellular communications system 1100 is a 5G system (5GS) including a NR RAN or LTE RAN (i.e., E-UTRA RAN). In this example, the RAN includes base stations 1102-1 and 1102-2, which in 5G NR are referred to as gNBs and in 5G with LTE RAN nodes connected to the 5GC are referred to as ng-eNBs, controlling corresponding (macro) cells 1104-1 and 1104-2. The base stations 1102-1 and 1102-2 are generally referred to herein collectively as base stations 1102 and individually as base station 1102. Likewise, the (macro) cells 1104-1 and 1104-2 are generally referred to herein collectively as (macro) cells 1104 and individually as (macro) cell 1104. The RAN may also include a number of low power nodes 1106-1 through 1106-4 controlling corresponding small cells 1108-1 through 1108-4. The low power nodes 1106-1 through 1106-4 can be small base stations (such as pico or femto base stations) or Remote Radio Heads (RRHs), or the like. Notably, while not illustrated, one or more of the small cells 1108-1 through 1108-4 may alternatively be provided by the base stations 1102. The low power nodes 1106-1 through 1106-4 are generally referred to herein collectively as low power nodes 1106 and individually as low power node 1106. Likewise, the small cells 1108-1 through 1108-4 are generally referred to herein collectively as small cells 1108 and individually as small cell 1108. The cellular communications system 1100 also includes a core network 1110, which in the 5GS is referred to as the 5G core (5GC). The base stations 1102 (and optionally the low power nodes 1106) are connected to the core network 1110.

The base stations 1102 and the low power nodes 1106 provide service to wireless communication devices 1112-1 through 1112-5 in the corresponding cells 1104 and 1108. The wireless communication devices 1112-1 through 1112-5 are generally referred to herein collectively as wireless communication devices 1112 and individually as wireless communication device 1112. In the following description, the wireless communication devices 1112 are oftentimes UEs and as such are sometimes referred to herein as UEs 1112, but the present disclosure is not limited thereto.

Now, a description of some example embodiments of the present disclosure will be described. While described under separate headings, these embodiments may be used separately or in any desired combination.

In some embodiments (e.g., the set of embodiments referred to below as "Embodiment 1"), solutions are proposed on how to map TCI states to codepoints in the TCI field (e.g., maximum number of TCI states to be mapped to codepoints in TCI field) in DCI depending on whether the serving cell or bandwidth part indicated in the MAC CE is configured for multi-PDCCH based multi-PDSCH reception or single-PDCCH based single PDSCH reception.

In some embodiments (e.g., the set of embodiments referred to below as "Embodiment 2"), solutions are proposed on how to efficiently map TCI states to codepoints in the TCI field for a plurality of serving cells or BWPs depending on whether at least one of the plurality of serving cells or bandwidth parts indicated in the MAC CE is configured for multi-PDCCH based multi-PDSCH reception or single-PDCCH based single PDSCH reception.

In some embodiments (e.g., the set of embodiments referred to below as "Embodiment 3"), solutions are proposed on how to simultaneously update TCI states for PDSCH for multiple TRPs by indicating the CORESET pool index associated with each TRP within the MAC CE along with the corresponding TCI states to be activated.

### Embodiment 1

In this embodiment, if a given serving cell with identity given by 'Serving Cell ID' indicated in the MAC CE activating/deactivating TCI states for PDSCH for this serving cell is configured for multi-PDCCH based PDSCH reception, then the UE 1112 receives a mapping with at most one TCI state mapped (i.e., indicated) for each of the codepoints in the DCI *Transmission Configuration Indication* field.

It should be noted that more than one TCI state mapped per codepoint in the DCI *Transmission Configuration Indication* field is only needed in case of single PDCCH scheduling multiple PDSCHs or multiple PDSCH layer sets. For multiple PDCCHs scheduling multiple PDSCHs (e.g., two PDCCHs scheduling two PDSCHs), one TCI state mapped per codepoint in the DCI *Transmission Configuration Indication* field is sufficient as there are multiple DCIs, and each DCI will indicate one TCI state using a codepoint in the *Transmission Configuration Indication* field.

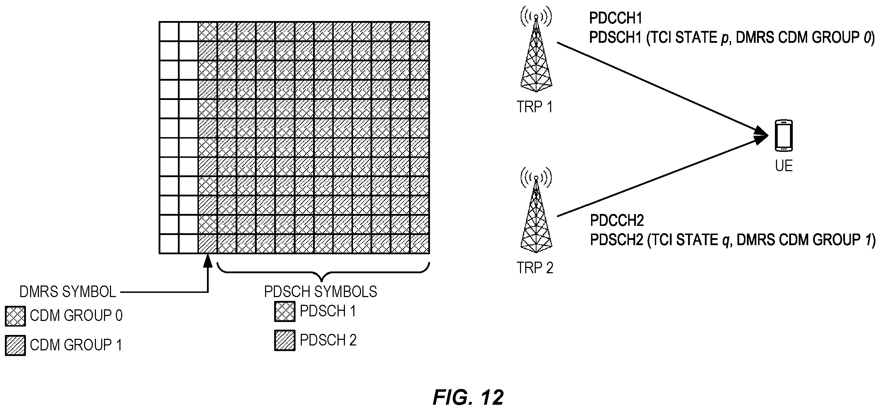

With DMRS type 1, there are only two CDM groups and multiple PDCCHs scheduling two PDSCHs from two TRPs will need two CDM groups, particularly when these two PDSCHs are fully overlapping or partially overlapping in time frequency domain. Figure 12 shows an example of multi-PDCCH scheduling two different PDSCHs which are fully overlapping in time-frequency domain, in which case DMRS CDM groups 0 and 1 are used for PDSCHs 1 and 2 respectively.

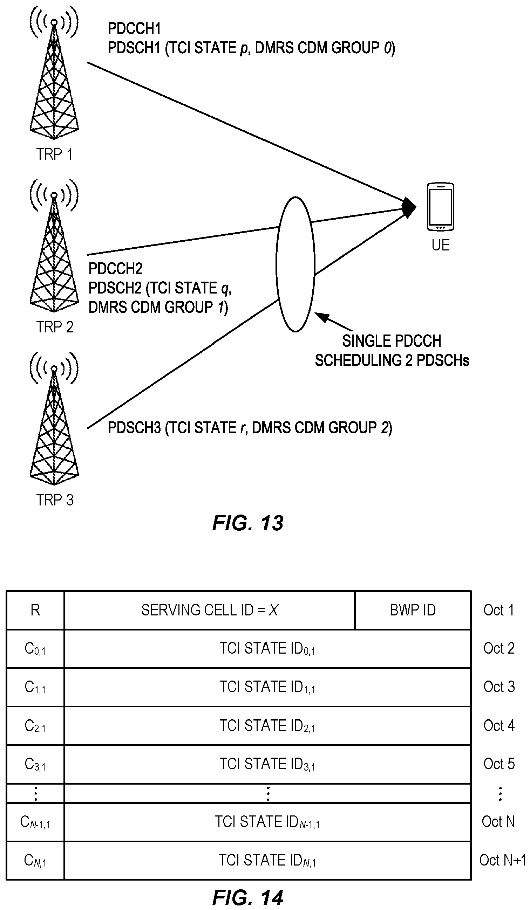

Figure 13 shows another example of a multi-PDCCH scheduling where PDCCH1 schedules a single PDSCH (i.e., PDSCH 1) while PDCCH2 schedules two different PDSCHs (i.e., PDSCH 2 and PDSCH 3). In this example, PDCCH2 is a single PDCCH scheduling two PDSCHs from two TRPs (TRPs 2 and 3). Since TRPs 2 and 3 are spatially separated, different CDM groups need to be indicated for PDSCHs 2 and 3. Hence, in the case of PDCCH2, two TCI states need to be mapped per codepoint in the DCI *Transmission Configuration Indication* field. However, this example requires a total of three CDM groups as there are three TRPs transmitting PDSCHs to the UE 1112 although only two TRPs are transmitting PDCCHs. Hence, the multi-PDCCH example in Figure 13 is not suitable for DMRS type 1 which is the mandatory DMRS configuration in NR since DMRS type 1 has two CDM groups while the example in Figure 13 requires 3 CDM groups.

By this embodiment, in the MAC CE activating/deactivating TCI states for PDSCH for this serving cell, the UE 1112 receives a mapping of at most one TCI state for each of the codepoints in the DCI *Transmission Configuration Indication* field, if the serving cell indicated in the MAC CE is configured for multi-PDCCH based PDSCH reception.

A key benefit of this embodiment is that it makes multi-PDCCH based multi-TRP transmission suitable for DMRS type 1 which is the mandatory DMRS configuration in NR. That is, since at most one TCI state is mapped to each of the codepoints in the DCI *Transmission Configuration Indication* field, each of the multi-PDCCHs (e.g., two PDCCHs) received by the UE 1112 will only indicate one TCI state and will use only one DMRS CDM group (recall, one DMRS CDM group is needed per TCI state). In the case of two PDCCHs, this amounts to using two DMRS CDM groups which is what is supported in NR DMRS type 1.

Even though the restriction of mapping/indication of at most one TCI state for each of the codepoints in the DCI *Transmission Configuration Indication* field is described on a per serving cell basis in this embodiment, this restriction can also be applied on a per BWP basis in an alternative embodiment. In this alternative embodiment, if a given BWP with identity given by 'BWP ID', as indicated in the MAC CE activating/deactivating TCI states for PDSCH is configured for multi-PDCCH based PDSCH reception, then the UE 1112 receives a mapping of at most one TCI state for each of the codepoints in the DCI *Transmission Configuration Indication* field.

In another embodiment, if a given serving cell with identity given by 'Serving Cell ID' indicated in the MAC CE activating/deactivating TCI states for PDSCH for this serving cell is configured for single-PDCCH based multi-PDSCH reception (or a PDSCH reception with two sets of layers each associated with a different TCI state), then the UE 1112 receives a mapping with more than one TCI state mapped/indicated for at least one codepoint in the DCI *Transmission Configuration Indication* field.

Next, some MAC CE examples applying this embodiment are shown. In these examples, Serving Cell with ID = X is configured to receive multi-PDCCH based PDSCHs while Serving cell ID =Y is configured to receive single-PDCCH based PDSCHs.

A first example MAC CE applying the restriction in Embodiment 1 is shown in Figure 14. In this example, TCI state ID_{i,*j*} denotes the *j*^{th} TCI state indicated for the *i^{th}* codepoint in the DCI *Transmission Configuration Indication* field. Furthermore, the C*_{i,j}* field indicates if a *(j+1)^{th}* TCI state associated with the *i^{th}* codepoint in the DCI *Transmission Configuration Indication* field will be present in the MAC CE. Given that Serving Cell with ID = X is configured to receive multi-PDCCH based PDSCHs, there is only one TCI state per codepoint of the DCI *Transmission Configuration Indication* field in this example. That is, the C*_{i,1}* fields corresponding each codepoint do not indicate the presence of a 2^{nd} TCI state associated with that codepoint.

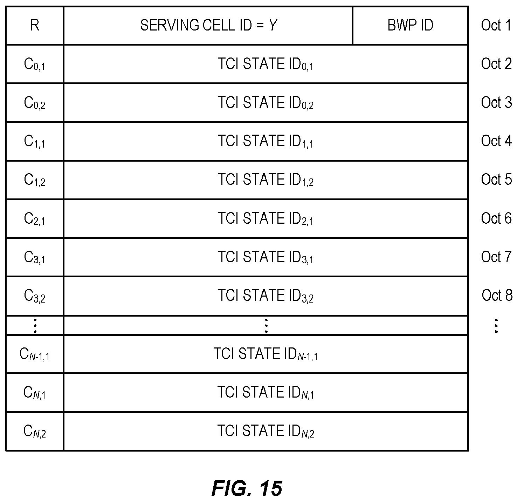

A second example MAC CE applying the restriction in Embodiment 1 is shown in Figure 15. In this example, TCI state ID_{i,*j*} denotes the *j*^{th} TCI state indicated for the *i^{th}* codepoint in the DCI *Transmission Configuration Indication* field. Furthermore, the C*_{i,j}* field indicates if a *(j+1)^{th}* TCI state associated with the *i^{th}* codepoint in the DCI *Transmission Configuration Indication* field will be present in the MAC CE. Given that Serving Cell with ID = Y is configured to receive single-PDCCH based PDSCHs, there can be one or more TCI states per codepoint of the DCI *Transmission Configuration Indication* field in this example. For instance,
- there are 2 TCI states (TCI state ID_{0,1} and TCI state ID_{0,2}) associated with codepoint 0 of the DCI *Transmission Configuration Indication* field. The C*_{0,1}* field indicates the presence of TCI state ID_{0,2}. And, the field C*_{0,2}* indicates there will be no further TCI states associated with codepoint 0 of the DCI *Transmission Configuration Indication* field.
- there is 1 TCI state (TCI state ID_{N-1,1}) associated with codepoint (N-1) of the DCI *Transmission Configuration Indication* field. The C*_{N-1,1}* field indicates there will be no further TCI states associated with codepoint *(N-1)* of the DCI *Transmission Configuration Indication* field.

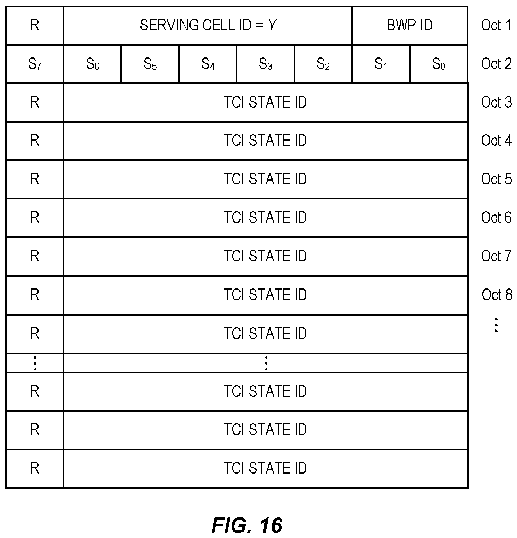

A third example MAC CE applying the restriction in Embodiment 1 is shown in Figure 16. In this example, the S*ᵢ* field indicates the number of TCI states associated with the *i^{th}* codepoint in the DCI *Transmission Configuration Indication* field. In the example of Figure 16, S*ᵢ* = 0 means that the *i^{th}* codepoint in the DCI *Transmission Configuration Indication* field is mapped to one TCI state. If S*ᵢ* = 1, then the *i^{th}* codepoint in the DCI *Transmission Configuration Indication* field is mapped to two TCI states. The byte containing the S*ᵢ* fields is only present if the Serving Cell is configured to receive single-PDCCH based PDSCHs, and the S*ᵢ* fields are missing from the MAC CE if the Serving Cell is configured to receive multi-PDCCH based PDSCHs. In this example, the mapping of TCI states to codepoints in the TCI *Transmission Configuration Indication* field are given as follows:
- The first N₀ TCI State IDs indicated in the MAC CE correspond to codepoint 0, where the value of N₀ (either 1 or 2) will be indicated by the S₀ field.
- The next N₁ TCI State IDs indicated in the MAC CE correspond to codepoint 1, where the value of N₁ (either 1 or 2) will be indicated by the S₁ field.
- ...
- The last N₇ TCI State IDs indicated in the MAC CE correspond to codepoint 7, where the value of N₇ (either 1 or 2) will be indicated by the S₇ field.

Note that although the third example shows one or two TCI states being mapped to a codepoint in the DCI *Transmission Configuration Indication* field, the example can also extended to more than two TCI states being mapped to a codepoint in the DCI *Transmission Configuration Indication* field. To extend this example to mapping up to four TCI states per codepoint in the DCI *Transmission Configuration Indication* field, a pair of bits S*ᵢ₁*S*ᵢ₀* in place of S*ᵢ* in the indicated MAC CE. The pair of bits S*ᵢ₁*S*ᵢ₀* can indicate whether 1, 2, 3, or 4 TCI states are mapped to the *i^{th}* codepoint in the DCI *Transmission Configuration Indication* field.

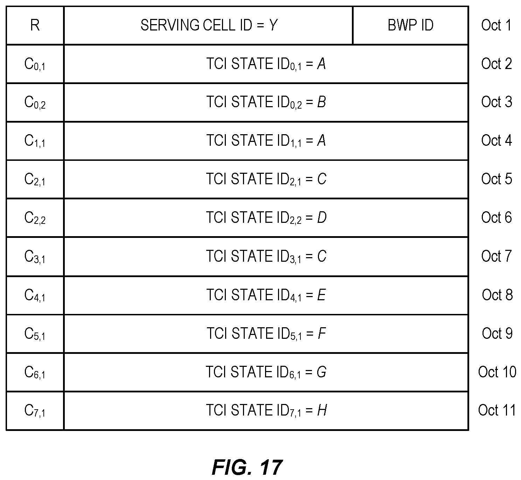

In some cases, the maximum number of activated TCI states can be limited to a certain number *Tₘₐₓ* so that the UE 1112 is only limited to receive transmissions corresponding to this limited number of TCI states. Hence, in some variants of Embodiment 1, the maximum number of unique TCI state IDs indicated by the MAC CE is limited to *Tₘₐₓ.* In NR Rel-16, *Tₘₐₓ* is agreed to be eight (8). Figure 17 shows an example MAC CE where 10 TCI state IDs are indicated with the following mappings to codepoints in the DCI Transmission configuration indication field:
- TCI States A and B mapped to codepoint 0
- TCI State A mapped to codepoint 1
- TCI States C and D mapped to codepoint 2
- TCI State C mapped to codepoint 3
- TCI State E mapped to codepoint 4
- TCI State F mapped to codepoint 5
- TCI State G mapped to codepoint 6
- TCI State H mapped to codepoint 7

Even though 10 TCI states are indicated, the maximum number of unique TCI states indicated (i.e., TCI states A, B, C, D, E, F, G, and H) by the MAC CE is limited to 8 according to this embodiment.

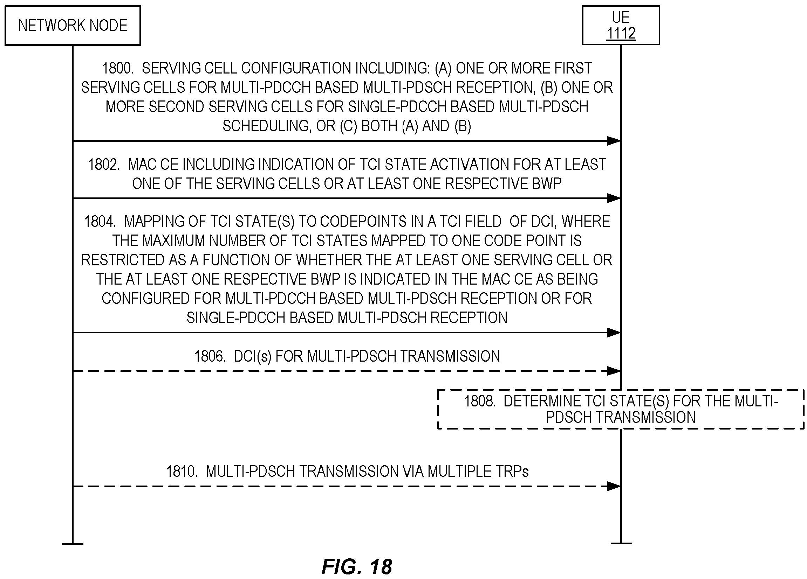

Figure 18 illustrates the operation of a network node and a UE 1112 in accordance with at least some aspects of at least some of the embodiments described above. Optional steps are indicated by dashed lines/boxes. Note that the network node may be a network node that provides joint scheduling for multiple TRPs for a multi-PDSCH transmission (see, e.g., Figure 6). The network node may, for example, be a base station 1102 that serves as one of the TRPs for a multi-PDSCH transmission (where the other TRP(s) for the multi-PDSCH transmission may be, e.g., another base station 1102 or a low power node 1106). Alternatively, in the case of separate scheduling for a multi-PDSCH transmission (see, e.g., Figure 7), the network node may be, e.g., a network node in which the separate schedulers are implemented or may alternatively be divided into multiple network nodes at which the respective schedulers are implemented (i.e., the functions shown in Figure 18 as being performed by the "network node" may, in some embodiments, be performed by two or more network nodes). As another alternative, this case, separate network nodes for separate TRPs may each perform the functions of Figure 18 as they pertain to the PDSCH/PDSH layer group transmission of the respective TRP.

As illustrated, the network node configures the UE 1112 with one or more serving cells (step 1800). The configured serving cell(s) include: (a) one or more first serving cells configured for multi-PDCCH based multi-PDSCH reception, (b) one or more second serving cells configured for single-PDCCH based multi-PDSCH reception, or (c) both (a) and (b).

The network node sends, or causes to be sent, a MAC CE to the UE 1112, where this MAC CE is a MAC CE for which TCI state activation/deactivation for PDSCH applies (step 1802). As described above, the MAC CE includes information that indicates one or more TCI states that are activated for at least one of the configured serving cells or the respective BWP. In addition, the network node sends, or causes to be sent, to the UE 1112 information that indicates mappings between the activated TCI states and codepoints of the TCI field of DCI, as described above (step 1804). As discussed above, in some embodiments, this information of step 1804 is also provided in the MAC CE of step 1802. As further described above, in this information, a restriction on the maximum number of TCI states that can be mapped to any codepoint in the TCI field of DCI is applied. This restriction is a function of whether the at least one configured serving cell or respective BWP(s) for which the TCI state(s) are activated is configured for multi-PDCCH based multi-PDSCH reception or single-PDCCH based multi-PDSCH reception, as described above. For example, as described above, in some embodiments, the maximum number is restricted to 1 for multi-PDCCH based multi-PDSCH reception and restricted to 2 for single-PDCCH based multi-PDSCH reception.

The network node may transmit, or cause transmission of, DCI(s) to the UE 1112 for a multi-PDSCH transmission (step 1806). The DCI(s) includes a respective TCI field that is set to a particular codepoint. This codepoint is mapped to one or more TCI states by the information in step 1804. The UE 1112 determines the TCI state(s) for the multi-PDSCH transmission based on the codepoint(s) in the TCI field(s) of the received DCI(s) and the mappings indicated by the information from step 1804 (step 1808). The network node transmits or causes transmission of the multi-PDSCH transmission, and the UE receives the multi-PDSCH transmission, in accordance with the indicated TCI state(s) (step 1810).

### Embodiment 2

In RAN1#98bis, the following conclusion and agreement were made in 3GPP RAN1:

### Conclusion

For the agreed feature of single MAC-CE to activate at least the same set of PDSCH TCI state IDs for multiple CCs/BWPs,
- In the RRC perspective, the candidate (up to 128) TCI-states are still independently configurable by RRC for each CC/BWP.

### Agreement

When a set of TCI-state IDs for PDSCH are activated by a MAC CE for a set of CCs/BWPs at least for the same band, where the applicable list of CCs is indicated by RRC signalling, the same set of TCI-state IDs are applied for the all BWPs in the indicated CCs.
- Further signaling details are up to RAN2.
- Whether to support the inter-band CA for this feature will be decided in RAN1#99.
- Whether to indicate the applicable list of bands for the feature of single MAC-CE to activate the same set of PDSCH TCI state IDs for multiple CCs/BWPs is up to capability discussion.
   ∘ FFS on the UE capability signaling details
- Note: This at least applies to single TRP case.
- FFS: How many combinations of CCs can be configured by RRC and relevant UE capability

The intention of the above conclusion/agreement is to reduce the signaling overhead for activating TCI states for a set of component carriers (CCs) or BWPs. That is, instead of sending a different MAC CE for a serving cell/BWP combination, this new agreement allows a set of TCI State-IDs for PDSCH to be activated by MAC CE for a set of CCs/BWPs. It was further agreed to introduce two lists of CCs for which simultaneous TCI state ID activation across multiple CCs/BWPs by MAC CE is applied. However, the above agreements are for the case of single TRP.

To define simultaneous TCI state ID activation across a set of CCs/BWPs for multi-TRP case, then the cases of multi-PDCCH based multi-TRP and single-PDCCH based multi-TRP need to be considered. In one embodiment, all the CCs in a list of CCs to be used for simultaneous TCI State-ID update should only involve CCs that have either multi-PDCCH based multi-TRP transmission enabled or single-PDCCH based multi-TRP transmission enabled.

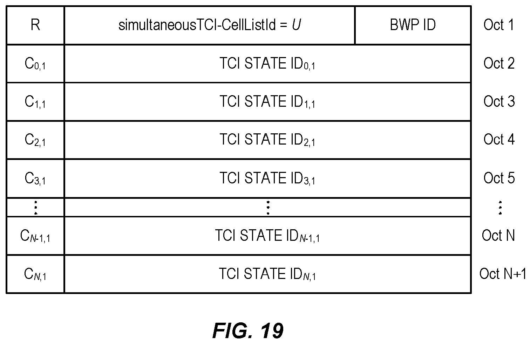

A first example MAC CE applying the restriction in Embodiment 2 is shown in Figure 19. In this example, TCI state ID_{i,*j*} denotes the *j*^{th} TCI state indicated for the *i^{th}* codepoint in the DCI *Transmission Configuration Indication* field. Furthermore, the C*_{i,j}* field indicates if a *(j+1)^{th}* TCI state associated with the *i^{th}* codepoint in the DCI *Transmission Configuration Indication* field will be present in the MAC CE. In this example, the CCs in the list with *simultaneousTCI-CellListId* = *U* are all configured to receive single-PDCCH based PDSCHs. Hence, there can be one or more TCI state per codepoint of the DCI *Transmission Configuration Indication* field in this example. For instance,
- there are two TCI states (TCI state ID_{0,1} and TCI state ID_{0,2}) associated with codepoint 0 of the DCI *Transmission Configuration Indication* field for all CCs in the list with *simultaneousTCI-CellListId = U.* The C*_{0,1}* field indicates the presence of TCI state ID_{0,2}. And, the field C*_{0,2}* indicates there will be no further TCI states associated with codepoint 0 of the DCI *Transmission Configuration Indication* field.
- there is one TCI state (TCI state ID_{N-1,1}) associated with codepoint *(N-1)* of the DCI *Transmission Configuration Indication* field for all CCs in the list with *simultaneousTCI-CellListId = U.* The C*_{N-1,1}* field indicates there will be no further TCI states associated with codepoint *(N-1)* of the DCI *Transmission Configuration Indication* field.

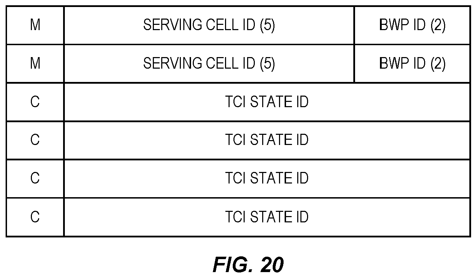

In another embodiment, RRC configured simultaneousTCI-CellListId is not needed, but a more flexible way of providing serving cell IDs is provided as illustrated in Figure 20. In Figure 20, the M field indicates whether or not there is an additional serving cell ID in a group of cells. The value '1' indicates there is an additional serving cell ID in a group of cells whose TCI state IDs are downselected for the DCI codepoints in the rest of the octets. The value '0' indicates the serving cell ID in the current octet is the last in the group of cells. The group of cells consists of *N* cells which are given as *(N-1)* serving cell IDs with serving cell IDs corresponding to F=1 in consecutive octets and an additional serving cell whose serving cell ID is given in the following Octet with F=0. Note that even though the M field is described here in context of a PDSCH MAC CE, it can be applied in a PDCCH MAC CE. The only difference is that, instead of giving TCI states mapping to DCI codepoints, the MAC CE gives TCI state for all the PDCCH of the serving cell and BWP listed.

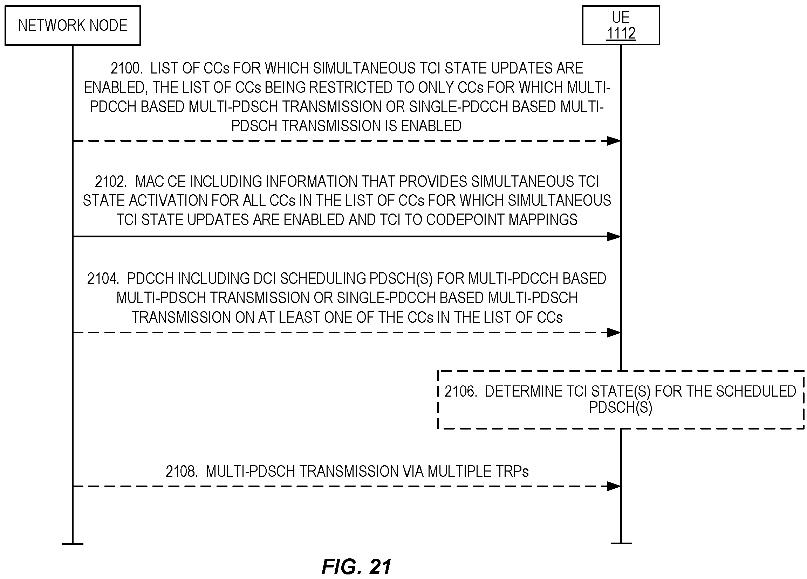

Figure 21 illustrates the operation of a network node and a UE 1112 in accordance with at least some aspects of at least some of the embodiments described above. Optional steps are indicated by dashed lines/boxes. Note that the network node may be a network node that provides joint scheduling for multiple TRPs for a multi-PDSCH transmission (see, e.g., Figure 6). The network node may, for example, be a base station 1102 that serves as one of the TRPs for a multi-PDSCH transmission (where the other TRP(s) for the multi-PDSCH transmission may be, e.g., another base station 1102 or a low power node 1106). Alternatively, in the case of separate scheduling for a multi-PDSCH transmission (see, e.g., Figure 7), the network node may be, e.g., a network node in which the separate schedulers are implemented or may alternatively be divided into multiple network nodes at which the respective schedulers are implemented (i.e., the functions shown in Figure 18 as being performed by the "network node" may, in some embodiments, be performed by two or more network nodes). As another alternative, separate network nodes for separate TRPs may each perform the functions of Figure 21 as they pertain to the PDSCH/PDSH layer group transmission of the respective TRP.

As illustrated, the network node may configure the UE 1112 with a list of CCs for which simultaneous TCI state updates are enabled (step 2100). As discussed above, the list of CCs is restricted to (i.e., only includes) CCs that have either multi-PDCCH based multi-PDSCH transmission or single-PDCCH based multi-PDSCH transmission enabled. The network node transmits or initiates transmission of a MAC CE for TCI state activation or deactivation to the UE 1112, and the UE 1112 receives the MAC CE (step 2102). As discussed above, the MAC CE includes information that (simultaneously) activates one or more TCI states for all of the CCs included in the list of CCs for which simultaneous TCI state updates are enabled. In addition, as described herein, the information included in the MAC CE maps at most X (e.g., X=2) of the TCI states activated by the MAC CE to each of the codepoints for the DCI *Transmission Configuration Indication* field.

The network node may transmit or initiate transmission of a PDCCH including a DCI in which the DCI *Transmission Configuration Indication* field is set to a particular codepoint that is mapped to the TCI state(s) to be used for at least one PDSCH scheduled by the DCI, and the UE 1112 receives the PDCCH (step 2104). The PDCCH is for either a multi-PDCCH based multi-PDSCH transmission or a single-PDCCH based multi-PDSCH transmission using at least one of the CCs in the configured list of CCs for simultaneous TCI state update. The UE 1112 determines the activated TCI state(s) that are mapped to the particular codepoint for the DCI *Transmission Configuration Indication* field included in the received DCI (step 2106). The determined TCI state(s) are then used for transmission of the scheduled PDSCH(s) and used by the UE 1112 for reception of the scheduled PDSCH(s) (step 2108).

### Embodiment 3

In some scenarios, the maximum number of TCI states that can be activated can be larger than the number of codepoints in the DCI *Transmission Configuration Indication* field. Consider the case where there are *Tₘₐₓ =* 8 TCI states that can be activated and multi-PDCCH based PDSCH reception is configured for a given serving cell. And, consider the case where there are two bits in the DCI *Transmission Configuration Indication* field which corresponds to four codepoints. In this case, it is possible to activate four TCI states to be used with the first PDCCH scheduling the first PDSCH, and to activate another four TCI states to be used with the second PDCCH scheduling the second PDSCH. However, when such activation of different sets of TCI states are provided via MAC CE, the UE 1112 needs to know which PDCCH the TCI states activated via MAC CE should be used with.

The maximum number of unique TCI state IDs indicated by the MAC CE is limited to *Tₘₐₓ.* In NR Rel-16, *Tₘₐₓ* is agreed to be eight (8). Figure 17 shows an example MAC CE where 10 TCI state IDs are indicated with the following mappings to codepoints in the DCI Transmission configuration indication field.

Since each CORESET pool consisting of one or more CORESETs corresponds to one TRP transmitting a PDCCH, then in one embodiment, the CORESET pool index may be indicated as part of the MAC CE. From the CORESET pool index, the UE 1112 knows that the activated TCI States and the associated codepoint to TCI state mapping should be applied to a PDCCH that is carried within one of the CORESETs in the CORESET pool. The benefit of this embodiment is that the TCI state activation and codepoint to TCI state mapping for two TRPs that sends two PDCCHs to the UE 1112 can be provided to the UE 1112 via independent MAC CEs.

In an alternative embodiment, TCI state activation and codepoint to TCI state mapping for two TRPs can be simultaneously provided within the same MAC CE. This is done by indicating a set of TCI state IDs to be activated and, for each of the TCI state IDs, indicating an associated CORESET pool index for the TCI state ID.

In yet another alternative embodiment, the CORESET pool index associated with a MAC CE that activates TCI states and provides codepoint to TCI state mapping for a TRP can be provided implicitly. The CORESET pool index is known to the UE 1112 as the pool of the CORESET that carries the PDCCH which is used to schedule the PDSCH carrying the TCI state indication MAC CE.

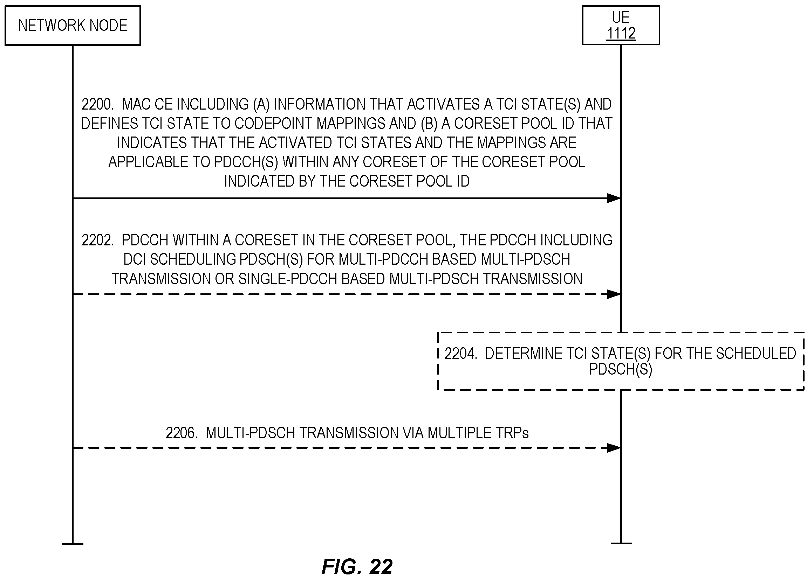

Figure 22 illustrates the operation of a network node and a UE 1112 in accordance with at least some aspects of at least some of the embodiments described above. Optional steps are indicated by dashed lines/boxes. Note that the network node may be a network node that provides joint scheduling for multiple TRPs for a multi-PDSCH transmission (see, e.g., Figure 6). The network node may, for example, be a base station 1102 that serves as one of the TRPs for a multi-PDSCH transmission (where the other TRP(s) for the multi-PDSCH transmission may be, e.g., another base station 1102 or a low power node 1106). Alternatively, in the case of separate scheduling for a multi-PDSCH transmission (see, e.g., Figure 7), the network node may be, e.g., a network node in which the separate schedulers are implemented or may alternatively be divided into multiple network nodes at which the respective schedulers are implemented (i.e., the functions shown in Figure 18 as being performed by the "network node" may, in some embodiments, be performed by two or more network nodes). As another alternative, separate network nodes for separate TRPs may each perform the functions of Figure 21 as they pertain to the PDSCH/PDSH layer group transmission of the respective TRP.

As illustrated, the network node transmits or initiates transmission of a MAC CE for TCI state activation or deactivation to the UE 1112, and the UE 1112 receives the MAC CE (step 2200). As discussed above, the MAC CE includes information that activates one or more TCI states and defines a codepoint to TCI state mapping that maps each of the codepoints of the DCI *Transmission Configuration Indication* field to at most X (e.g., X=2) of the TCI states activated by the MAC CE. In addition, as described above, in one embodiment the MAC CE includes a CORESET pool ID that indicates that the TCI states activated by the MAC CE and the codepoint to TCI state mapping defined by the information included in the MAC CE are to be applied to a PDCCH(s) that is carried within any CORESET in the CORESET pool indicated by the CORESET pool ID.

The network node may transmit or initiate transmission of a PDCCH carried within a CORSET in the CORESET pool indicated by the CORESET pool ID (step 2202). The PDCCH includes a DCI in which the DCI *Transmission Configuration Indication* field is set to a particular codepoint that is mapped to the TCI state(s) to be used for at least one PDSCH scheduled by the DCI, and the UE 1112 receives the PDCCH. The UE 1112 determines the activated TCI state(s) that are mapped to the particular codepoint for the DCI *Transmission Configuration Indication* field included in the received DCI (step 2204). The determined TCI state(s) are then used for transmission of the scheduled PDSCH(s) and used by the UE 1112 for reception of the scheduled PDSCH(s) (step 2206).

### Additional Description and Aspects

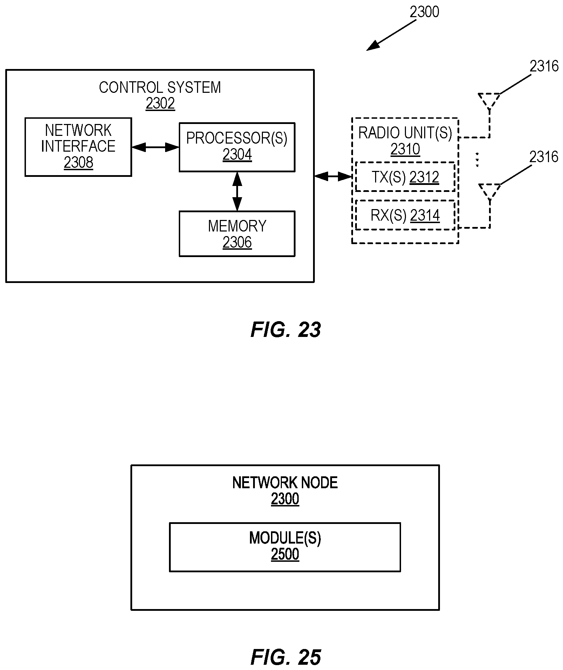

Figure 23 is a schematic block diagram of a network node 2300 according to some embodiments of the present disclosure. Optional features are represented by dashed boxes. The network node 2300 may be, for example, the network node of Figure 18 (which may be, e.g., a radio network node such as, e.g., a base station 1102 or 1106), a network node that implements all or part of the functionality of the network node of Figure 18, as described herein. As illustrated, the network node 2300 includes a control system 2302 that includes one or more processors 2304 (e.g., Central Processing Units (CPUs), Application Specific Integrated Circuits (ASICs), Field Programmable Gate Arrays (FPGAs), and/or the like), memory 2306, and a network interface 2308. The one or more processors 2304 are also referred to herein as processing circuitry. In addition, if the network node 2300 is a radio access node, the network node 2300 may include one or more radio units 2310 that each includes one or more transmitters 2312 and one or more receivers 2314 coupled to one or more antennas 2316. The radio units 2310 may be referred to or be part of radio interface circuitry. In some embodiments, the radio unit(s) 2310 is external to the control system 2302 and connected to the control system 2302 via, e.g., a wired connection (e.g., an optical cable). However, in some other embodiments, the radio unit(s) 2310 and potentially the antenna(s) 2316 are integrated together with the control system 2302. The one or more processors 2304 operate to provide one or more functions of a network node 2300 as described herein (e.g., one or more functions of the network node as described above, e.g., with respect to Figure 18). In some embodiments, the function(s) are implemented in software that is stored, e.g., in the memory 2306 and executed by the one or more processors 2304.

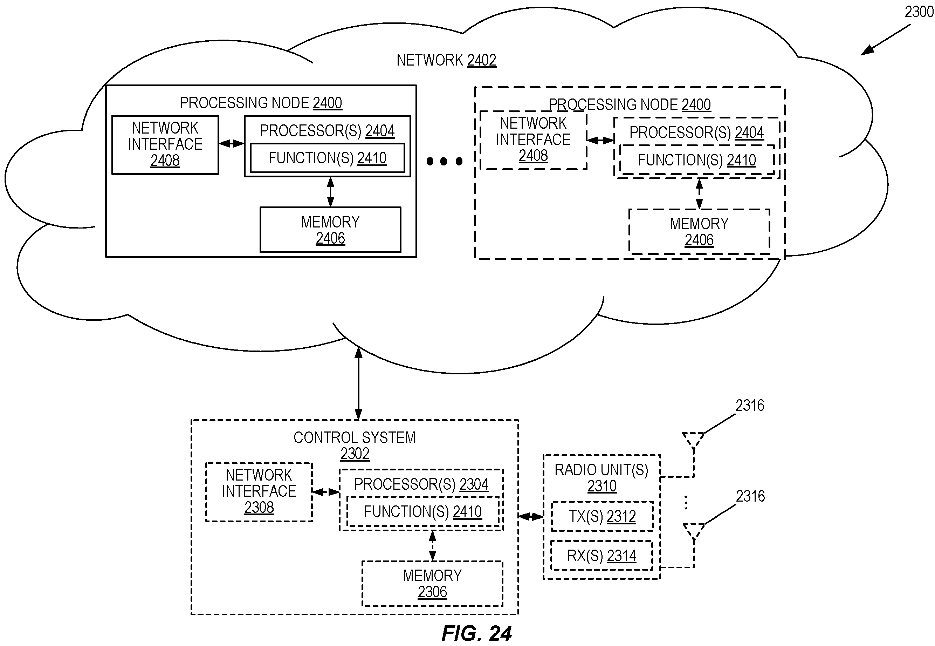

Figure 24 is a schematic block diagram that illustrates a virtualized embodiment of the network node 2300 according to some embodiments of the present disclosure. Again, optional features are represented by dashed boxes. As used herein, a "virtualized" network node is an implementation of the network node 2300 in which at least a portion of the functionality of the network node 2300 is implemented as a virtual component(s) (e.g., via a virtual machine(s) executing on a physical processing node(s) in a network(s)). As illustrated, in this example, the network node 2300 includes one or more processing nodes 2400 coupled to or included as part of a network(s) 2402. Each processing node 2400 includes one or more processors 2404 (e.g., CPUs, ASICs, FPGAs, and/or the like), memory 2406, and a network interface 2408. In addition, if the network node 2300 is a radio access node, the network node 2300 may include the control system 2302 and/or the one or more radio units 2310, as described above. If present, the control system 2302 or the radio unit(s) is connected to the processing node(s) 2400 via the network 2402.

In this example, functions 2410 of the network node 2300 described herein (e e.g., one or more functions of the network node as described above, e.g., with respect to Figure 18) are implemented at the network processing nodes 2400 or distributed across the one or more processing nodes 2400 and the control system 2302 and/or the radio unit(s) 2310 in any desired manner. In some particular embodiments, some or all of the functions 2410 of the network node 2300 described herein are implemented as virtual components executed by one or more virtual machines implemented in a virtual environment(s) hosted by the processing node(s) 2400. As will be appreciated by one of ordinary skill in the art, additional signaling or communication between the processing node(s) 2400 and the control system 2302 is used in order to carry out at least some of the desired functions 2410. Notably, in some embodiments, the control system 2302 may not be included, in which case the radio unit(s) 2310 communicate directly with the processing node(s) 2400 via an appropriate network interface(s).

In some embodiments, a computer program including instructions which, when executed by at least one processor, causes the at least one processor to carry out the functionality of network node 2300 or a node (e.g., a processing node 2400) implementing one or more of the functions 2410 of the network node 2300 in a virtual environment according to any of the embodiments described herein (e e.g., one or more functions of the network node as described above, e.g., with respect to Figure 18) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 25 is a schematic block diagram of the network node 2300 according to some other embodiments of the present disclosure. The network node 2300 includes one or more modules 2500, each of which is implemented in software. The module(s) 2500 provide the functionality of the network node 2300 described herein (e.g., one or more functions of the network node as described above, e.g., with respect to Figure 18). This discussion is equally applicable to the processing node 2400 of Figure 24 where the modules 2500 may be implemented at one of the processing nodes 2400 or distributed across multiple processing nodes 2400 and/or distributed across the processing node(s) 2400 and the control system 2302.

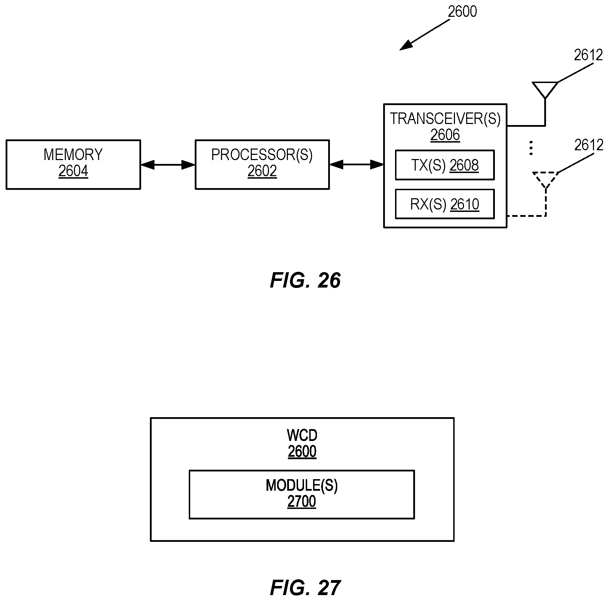

Figure 26 is a schematic block diagram of a wireless communication device 2600 according to some embodiments of the present disclosure. The wireless communication device 2600 may be, e.g., the UE 1112 or UE described herein. As illustrated, the wireless communication device 2600 includes one or more processors 2602 (e.g., CPUs, ASICs, FPGAs, and/or the like), memory 2604, and one or more transceivers 2606 each including one or more transmitters 2608 and one or more receivers 2610 coupled to one or more antennas 2612. The transceiver(s) 2606 includes radio-front end circuitry connected to the antenna(s) 2612 that is configured to condition signals communicated between the antenna(s) 2612 and the processor(s) 2602, as will be appreciated by on of ordinary skill in the art. The processors 2602 are also referred to herein as processing circuitry. The transceivers 2606 are also referred to herein as radio circuitry. In some embodiments, the functionality of the wireless communication device 2600 described above (e.g., one or more functions of the UE 1112 described above with respect to Embodiments 1-3 and Figure 18) may be fully or partially implemented in software that is, e.g., stored in the memory 2604 and executed by the processor(s) 2602. Note that the wireless communication device 2600 may include additional components not illustrated in Figure 26 such as, e.g., one or more user interface components (e.g., an input/output interface including a display, buttons, a touch screen, a microphone, a speaker(s), and/or the like and/or any other components for allowing input of information into the wireless communication device 2600 and/or allowing output of information from the wireless communication device 2600), a power supply (e.g., a battery and associated power circuitry), etc.

In some embodiments, a computer program including instructions which, when executed by at least one processor, causes the at least one processor to carry out the functionality of the wireless communication device 2600 according to any of the embodiments described herein (e.g., one or more functions of the UE 1112 described above with respect to Embodiments 1-3 and Figure 18) is provided. In some embodiments, a carrier comprising the aforementioned computer program product is provided. The carrier is one of an electronic signal, an optical signal, a radio signal, or a computer readable storage medium (e.g., a non-transitory computer readable medium such as memory).

Figure 27 is a schematic block diagram of the wireless communication device 2600 according to some other embodiments of the present disclosure. The wireless communication device 2600 includes one or more modules 2700, each of which is implemented in software. The module(s) 2700 provide the functionality of the wireless communication device 2600 described herein (e.g., one or more functions of the UE 1112 described above with respect to Embodiments 1-3 and Figure 18).

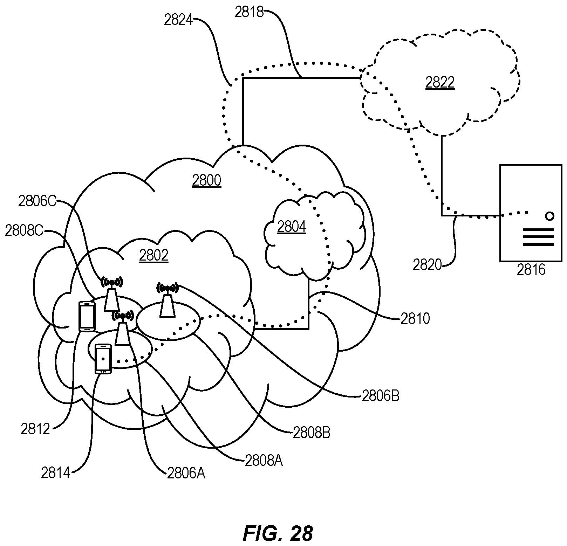

With reference to Figure 28, in accordance with an embodiment, a communication system includes a telecommunication network 2800, such as a 3GPP-type cellular network, which comprises an access network 2802, such as a RAN, and a core network 2804. The access network 2802 comprises a plurality of base stations 2806A, 2806B, 2806C, such as Node Bs, eNBs, gNBs, or other types of wireless Access Points (APs), each defining a corresponding coverage area 2808A, 2808B, 2808C. Each base station 2806A, 2806B, 2806C is connectable to the core network 2804 over a wired or wireless connection 2810. A first UE 2812 located in coverage area 2808C is configured to wirelessly connect to, or be paged by, the corresponding base station 2806C. A second UE 2814 in coverage area 2808A is wirelessly connectable to the corresponding base station 2806A. While a plurality of UEs 2812, 2814 are illustrated in this example, the disclosed embodiments are equally applicable to a situation where a sole UE is in the coverage area or where a sole UE is connecting to the corresponding base station 2806.

The telecommunication network 2800 is itself connected to a host computer 2816, which may be embodied in the hardware and/or software of a standalone server, a cloud-implemented server, a distributed server, or as processing resources in a server farm. The host computer 2816 may be under the ownership or control of a service provider, or may be operated by the service provider or on behalf of the service provider. Connections 2818 and 2820 between the telecommunication network 2800 and the host computer 2816 may extend directly from the core network 2804 to the host computer 2816 or may go via an optional intermediate network 2822. The intermediate network 2822 may be one of, or a combination of more than one of, a public, private, or hosted network; the intermediate network 2822, if any, may be a backbone network or the Internet; in particular, the intermediate network 2822 may comprise two or more sub-networks (not shown).

The communication system of Figure 28 as a whole enables connectivity between the connected UEs 2812, 2814 and the host computer 2816. The connectivity may be described as an Over-the-Top (OTT) connection 2824. The host computer 2816 and the connected UEs 2812, 2814 are configured to communicate data and/or signaling via the OTT connection 2824, using the access network 2802, the core network 2804, any intermediate network 2822, and possible further infrastructure (not shown) as intermediaries. The OTT connection 2824 may be transparent in the sense that the participating communication devices through which the OTT connection 2824 passes are unaware of routing of uplink and downlink communications. For example, the base station 2806 may not or need not be informed about the past routing of an incoming downlink communication with data originating from the host computer 2816 to be forwarded (e.g., handed over) to a connected UE 2812. Similarly, the base station 2806 need not be aware of the future routing of an outgoing uplink communication originating from the UE 2812 towards the host computer 2816.

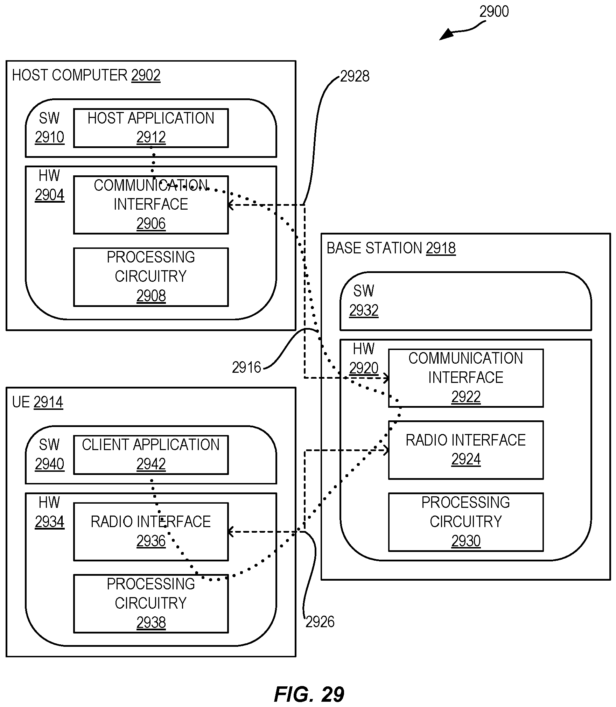

Example implementations, in accordance with an embodiment, of the UE, base station, and host computer discussed in the preceding paragraphs will now be described with reference to Figure 29. In a communication system 2900, a host computer 2902 comprises hardware 2904 including a communication interface 2906 configured to set up and maintain a wired or wireless connection with an interface of a different communication device of the communication system 2900. The host computer 2902 further comprises processing circuitry 2908, which may have storage and/or processing capabilities. In particular, the processing circuitry 2908 may comprise one or more programmable processors, ASICs, FPGAs, or combinations of these (not shown) adapted to execute instructions. The host computer 2902 further comprises software 2910, which is stored in or accessible by the host computer 2902 and executable by the processing circuitry 2908. The software 2910 includes a host application 2912. The host application 2912 may be operable to provide a service to a remote user, such as a UE 2914 connecting via an OTT connection 2916 terminating at the UE 2914 and the host computer 2902. In providing the service to the remote user, the host application 2912 may provide user data which is transmitted using the OTT connection 2916.

The communication system 2900 further includes a base station 2918 provided in a telecommunication system and comprising hardware 2920 enabling it to communicate with the host computer 2902 and with the UE 2914. The hardware 2920 may include a communication interface 2922 for setting up and maintaining a wired or wireless connection with an interface of a different communication device of the communication system 2900, as well as a radio interface 2924 for setting up and maintaining at least a wireless connection 2926 with the UE 2914 located in a coverage area (not shown in Figure 29) served by the base station 2918. The communication interface 2922 may be configured to facilitate a connection 2928 to the host computer 2902. The connection 2928 may be direct or it may pass through a core network (not shown in Figure 29) of the telecommunication system and/or through one or more intermediate networks outside the telecommunication system. In the embodiment shown, the hardware 2920 of the base station 2918 further includes processing circuitry 2930, which may comprise one or more programmable processors, ASICs, FPGAs, or combinations of these (not shown) adapted to execute instructions. The base station 2918 further has software 2932 stored internally or accessible via an external connection.

The communication system 2900 further includes the UE 2914 already referred to. The UE's 2914 hardware 2934 may include a radio interface 2936 configured to set up and maintain a wireless connection 2926 with a base station serving a coverage area in which the UE 2914 is currently located. The hardware 2934 of the UE 2914 further includes processing circuitry 2938, which may comprise one or more programmable processors, ASICs, FPGAs, or combinations of these (not shown) adapted to execute instructions. The UE 2914 further comprises software 2940, which is stored in or accessible by the UE 2914 and executable by the processing circuitry 2938. The software 2940 includes a client application 2942. The client application 2942 may be operable to provide a service to a human or non-human user via the UE 2914, with the support of the host computer 2902. In the host computer 2902, the executing host application 2912 may communicate with the executing client application 2942 via the OTT connection 2916 terminating at the UE 2914 and the host computer 2902. In providing the service to the user, the client application 2942 may receive request data from the host application 2912 and provide user data in response to the request data. The OTT connection 2916 may transfer both the request data and the user data. The client application 2942 may interact with the user to generate the user data that it provides.

It is noted that the host computer 2902, the base station 2918, and the UE 2914 illustrated in Figure 29 may be similar or identical to the host computer 2816, one of the base stations 2806A, 2806B, 2806C, and one of the UEs 2812, 2814 of Figure 28, respectively. This is to say, the inner workings of these entities may be as shown in Figure 29 and independently, the surrounding network topology may be that of Figure 28.

In Figure 29, the OTT connection 2916 has been drawn abstractly to illustrate the communication between the host computer 2902 and the UE 2914 via the base station 2918 without explicit reference to any intermediary devices and the precise routing of messages via these devices. The network infrastructure may determine the routing, which may be configured to hide from the UE 2914 or from the service provider operating the host computer 2902, or both. While the OTT connection 2916 is active, the network infrastructure may further take decisions by which it dynamically changes the routing (e.g., on the basis of load balancing consideration or reconfiguration of the network).

The wireless connection 2926 between the UE 2914 and the base station 2918 is in accordance with the teachings of the embodiments described throughout this disclosure. One or more of the various embodiments improve the performance of OTT services provided to the UE 2914 using the OTT connection 2916, in which the wireless connection 2926 forms the last segment. More precisely, the teachings of these embodiments may improve, e.g., the data rate and thereby provide benefits such as, e.g., reduced user waiting time.

A measurement procedure may be provided for the purpose of monitoring data rate, latency, and other factors on which the one or more embodiments improve. There may further be an optional network functionality for reconfiguring the OTT connection 2916 between the host computer 2902 and the UE 2914, in response to variations in the measurement results. The measurement procedure and/or the network functionality for reconfiguring the OTT connection 2916 may be implemented in the software 2910 and the hardware 2904 of the host computer 2902 or in the software 2940 and the hardware 2934 of the UE 2914, or both. In some embodiments, sensors (not shown) may be deployed in or in association with communication devices through which the OTT connection 2916 passes; the sensors may participate in the measurement procedure by supplying values of the monitored quantities exemplified above, or supplying values of other physical quantities from which the software 2910, 2940 may compute or estimate the monitored quantities. The reconfiguring of the OTT connection 2916 may include message format, retransmission settings, preferred routing, etc.; the reconfiguring need not affect the base station 2918, and it may be unknown or imperceptible to the base station 2918. Such procedures and functionalities may be known and practiced in the art. In certain embodiments, measurements may involve proprietary UE signaling facilitating the host computer 2902's measurements of throughput, propagation times, latency, and the like. The measurements may be implemented in that the software 2910 and 2940 causes messages to be transmitted, in particular empty or 'dummy' messages, using the OTT connection 2916 while it monitors propagation times, errors, etc.

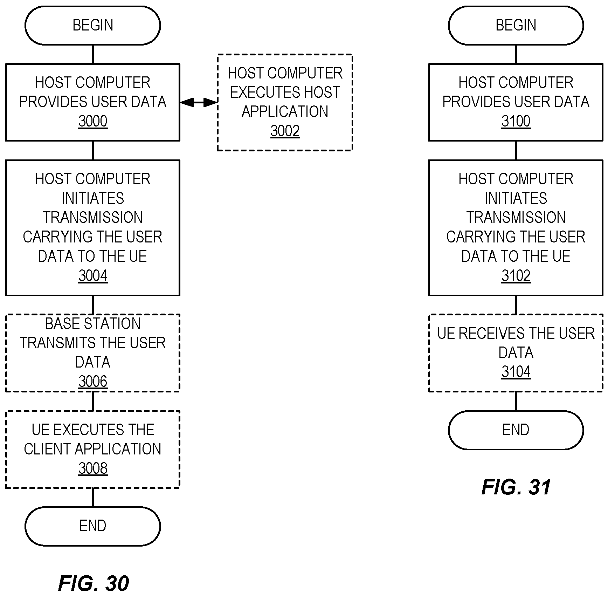

Figure 30 is a flowchart illustrating a method implemented in a communication system, in accordance with one embodiment. The communication system includes a host computer, a base station, and a UE which may be those described with reference to Figures 28 and 29. For simplicity of the present disclosure, only drawing references to Figure 30 will be included in this section. In step 3000, the host computer provides user data. In sub-step 3002 (which may be optional) of step 3000, the host computer provides the user data by executing a host application. In step 3004, the host computer initiates a transmission carrying the user data to the UE. In step 3006 (which may be optional), the base station transmits to the UE the user data which was carried in the transmission that the host computer initiated, in accordance with the teachings of the embodiments described throughout this disclosure. In step 3008 (which may also be optional), the UE executes a client application associated with the host application executed by the host computer.

Figure 31 is a flowchart illustrating a method implemented in a communication system, in accordance with one embodiment. The communication system includes a host computer, a base station, and a UE which may be those described with reference to Figures 28 and 29. For simplicity of the present disclosure, only drawing references to Figure 31 will be included in this section. In step 3100 of the method, the host computer provides user data. In an optional sub-step (not shown) the host computer provides the user data by executing a host application. In step 3102, the host computer initiates a transmission carrying the user data to the UE. The transmission may pass via the base station, in accordance with the teachings of the embodiments described throughout this disclosure. In step 3104 (which may be optional), the UE receives the user data carried in the transmission.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include Digital Signal Processor (DSPs), special-purpose digital logic, and the like. The processing circuitry may be configured to execute program code stored in memory, which may include one or several types of memory such as Read Only Memory (ROM), Random Access Memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

While processes in the figures may show a particular order of operations performed by certain embodiments of the present disclosure, it should be understood that such order is exemplary (e.g., alternative embodiments may perform the operations in a different order, combine certain operations, overlap certain operations, etc.).

At least some of the following abbreviations may be used in this disclosure. If there is an inconsistency between abbreviations, preference should be given to how it is used above. If listed multiple times below, the first listing should be preferred over any subsequent listing(s).

| | |
|---|---|
| • 3GPP | Third Generation Partnership Project |
| • 5G | Fifth Generation |
| • 5GC | Fifth Generation Core |
| • 5GS | Fifth Generation System |
| • AF | Application Function |
| • AMF | Access and Mobility Function |
| • AN | Access Network |
| • AP | Access Point |
| • ASIC | Application Specific Integrated Circuit |
| • AUSF | Authentication Server Function |
| • CPU | Central Processing Unit |
| • DN | Data Network |
| • DSP | Digital Signal Processor |
| • eNB | Enhanced or Evolved Node B |
| • EPS | Evolved Packet System |
| • E-UTRA | Evolved Universal Terrestrial Radio Access |
| • FPGA | Field Programmable Gate Array |
| • gNB | New Radio Base Station |
| • gNB-DU | New Radio Base Station Distributed Unit |
| • HSS | Home Subscriber Server |
| • IoT | Internet of Things |
| • IP | Internet Protocol |
| • LTE | Long Term Evolution |
| • MME | Mobility Management Entity |
| • MTC | Machine Type Communication |
| • NEF | Network Exposure Function |
| • NF | Network Function |
| • NR | New Radio |
| • NRF | Network Function Repository Function |
| • NSSF | Network Slice Selection Function |
| • OTT | Over-the-Top |
| • PC | Personal Computer |
| • PCF | Policy Control Function |
| • P-GW | Packet Data Network Gateway |
| • QoS | Quality of Service |
| • RAM | Random Access Memory |
| • RAN | Radio Access Network |
| • ROM | Read Only Memory |
| • RRH | Remote Radio Head |
| • RTT | Round Trip Time |
| • SCEF | Service Capability Exposure Function |
| • SMF | Session Management Function |
| • UDM | Unified Data Management |
| • UE | User Equipment |
| • UPF | User Plane Function |

## Claims

1. A method performed by a wireless communication device (1112, 2600) in a cellular communications system (1100), the method comprising:
• receiving (2200), from a network node (2300), a Medium Access Control, MAC, Control Element, CE, for Transmission Configuration Indication, TCI, state activation or deactivation, the MAC CE comprising:
o information that:
▪ activates one or more TCI states;
▪ defines a codepoint to TCI state mapping, wherein the codepoint to TCI state mapping maps each of a plurality of codepoints for a Downlink Control information, DCI, transmission configuration indication field to at most X of the one or more TCI states activated by the MAC CE, where X is an integer greater than or equal to 1; and
o a control resource set, CORESET, pool identity, ID, that indicates that the one or more TCI states activated by the MAC CE and the codepoint to TCI state mapping defined by the information comprised in the MAC CE are to be applied to a physical downlink control channel, PDCCH, that is carried within any CORESET in a CORESET pool indicated by the CORESET pool ID;
• receiving (2202) a PDCCH carried within a CORESET in the CORESET pool indicated by the CORESET pool ID, the PDCCH comprising a DCI in which the DCI transmission configuration field is set to a particular codepoint from among the plurality of codepoints for the DCI transmission configuration field; and
• determining (2204) a TCI state from among the one or more TCI states activated by the MAC CE used for a PDSCH scheduled by the DCI based on the information comprised in the DCI.

2. The method of claim 1 wherein X=1.

3. The method of claim 1 wherein X=2.

4. The method of any of claims 1 to 3 wherein the PDSCH scheduled by the DCI is part of a multi-PDCCH based multi-PDSCH transmission.

5. The method of any of claims 1 to 4 further comprising receiving (2206) the PDSCH scheduled by the DCI.

6. A computer-readable medium (2604) comprising code portions which, when executed on a processor (2602), configure the processor to perform the method according to any one of claims 1 to 5.

7. A wireless communication device (1112, 2600) for a cellular communications system (1100), the wireless communication device (1112, 2600) adapted to:
• receive (2200), from a network node, a Medium Access Control, MAC, Control Element, CE, for Transmission Configuration Indication, TCI, state activation or deactivation, the MAC CE comprising:
o information that:
▪ activates one or more TCI states;
▪ defines a codepoint to TCI state mapping, wherein the codepoint to TCI state mapping maps each of a plurality of codepoints for a Downlink Control information, DCI, transmission configuration indication field to at most X of the one or more TCI states activated by the MAC CE, where X is an integer greater than or equal to 1; and
o a control resource set, CORESET, pool identity, ID, that indicates that the one or more TCI states activated by the MAC CE and the codepoint to TCI state mapping defined by the information comprised in the MAC CE are to be applied to a physical downlink control channel, PDCCH, that is carried within any CORESET in a CORESET pool indicated by the CORESET pool ID;
• receive (2202) a PDCCH carried within a CORESET in the CORESET pool indicated by the CORESET pool ID, the PDCCH comprising a DCI in which the DCI transmission configuration field is set to a particular codepoint from among the plurality of codepoints for the DCI transmission configuration field; and
• determine (2204) a TCI state from among the one or more TCI states activated by the MAC CE used for a PDSCH scheduled by the DCI based on the information comprised in the DCI.

8. The wireless communication device (1112, 2600) of claim 9 wherein the wireless communication device (1112, 2600) is further adapted to perform the method of any of claims 2 to 5.

9. A method performed by a network node (2300) in a cellular communications system (1100), the method comprising:
• transmitting or initiating (2200) transmission of, to a wireless communication device (1112, 2600), a Medium Access Control, MAC, Control Element, CE, for Transmission Configuration Indication, TCI, state activation or deactivation, the MAC CE comprising:
o information that:
▪ activates one or more TCI states;
▪ defines a codepoint to TCI state mapping, wherein the codepoint to TCI state mapping maps each of a plurality of codepoints for a Downlink Control information, DCI, transmission configuration indication field to at most X of the one or more TCI states activated by the MAC CE, where X is an integer greater than or equal to 1; and
o a control resource set, CORESET, pool identity, ID, that indicates that the one or more TCI states activated by the MAC CE and the codepoint to TCI state mapping defined by the information comprised in the MAC CE are to be applied to a physical downlink control channel, PDCCH, that is carried within any CORESET in a CORESET pool indicated by the CORESET pool ID; and
• transmitting or initiating (2202) transmission of a PDCCH carried within a CORESET in the CORESET pool indicated by the CORESET pool ID to the wireless communication device (1112, 2600), the PDCCH comprising a DCI in which the DCI transmission configuration field is set to a particular codepoint from among the plurality of codepoints for the DCI transmission configuration field.

10. The method of claim 9 wherein
X=1; or
X=2.

11. The method of claim 9 or 10 wherein the PDSCH scheduled by the DCI is part of a multi-PDCCH based multi-PDSCH transmission.

12. The method of claim 9 or 11 further comprising transmitting or initiating transmission of (2206) the PDSCH scheduled by the DCI.

13. A computer-readable medium (2306) comprising code portions which, when executed on a processor (2304), configure the processor to perform the method according to any one of claims 9 to 12.

14. A network node (2300) for a cellular communications system (1100), the network node adapted to:
• transmit or initiate (2200) transmission of, to a wireless communication device (1112, 2600), a Medium Access Control, MAC, Control Element, CE, for Transmission Configuration Indication, TCI, state activation or deactivation, the MAC CE comprising:
o information that:
▪ activates one or more TCI states;
▪ defines a codepoint to TCI state mapping, wherein the codepoint to TCI state mapping maps each of a plurality of codepoints for a Downlink Control information, DCI, transmission configuration indication field to at most X of the one or more TCI states activated by the MAC CE, where X is an integer greater than or equal to 1; and
o a control resource set, CORESET, pool identity, ID, that indicates that the one or more TCI states activated by the MAC CE and the codepoint to TCI state mapping defined by the information comprised in the MAC CE are to be applied to a physical downlink control channel, PDCCH, that is carried within any CORESET in a CORESET pool indicated by the CORESET pool ID; and
• transmit or initiate (2202) transmission of a PDCCH carried within a CORESET in the CORESET pool indicated by the CORESET pool ID to the wireless communication device (1112, 2600), the PDCCH comprising a DCI in which the DCI transmission configuration field is set to a particular codepoint from among the plurality of codepoints for the DCI transmission configuration field.

15. The network node of claim 14 wherein the network node is further adapted to perform the method of any of claims 10 to 12.

## Patentansprüche

1. Verfahren, durchgeführt durch eine drahtlose Kommunikationsvorrichtung (1112, 2600) in einem zellularen Kommunikationssystem (1100), wobei das Verfahren Folgendes umfasst:
• Empfangen (2200), von einem Netzwerkknoten (2300), eines Medienzugriffsteuerungs-Steuerelements, MAC-CE, zur Übertragungskonfigurationsanzeige-Zustandsaktivierung oder -deaktivierung, TCI-Zustandsaktivierung oder -deaktivierung, wobei das MAC-CE Folgendes umfasst:
o Informationen, die:
▪ einen oder mehrere TCI-Zustände aktivieren;
▪ einen Codepunkt für eine TCI-Zustandszuordnung definieren, wobei der Codepunkt für eine TCI-Zustandszuordnung jeden einer Vielzahl von Codepunkten für ein Übertragungskonfigurationsanzeigefeld für Downlink-Steuerinformationen, DCI-Übertragungskonfigurationsanzeigefeld, höchstens X des einen oder der mehreren TCI-Zustände, die durch das MAC-CE aktiviert werden, zuordnet, wobei X eine ganze Zahl größer als oder gleich 1 ist; und
o eine Steuerressourcensatz-Poolkennung, CORESET-Pool-ID, die anzeigt, dass der eine oder die mehreren TCI-Zustände, die durch das MAC-CE aktiviert werden, und der Codepunkt für eine TCI-Zustandszuordnung, der durch die Informationen, die in dem MAC-CE umfasst sind, definiert wird, auf einen physikalischen Downlink-Steuerkanal, PDCCH, anzuwenden sind, der in einem beliebigen CORESET in einem CORESET-Pool, der durch die CORESET-Pool-ID angezeigt wird, getragen wird;
• Empfangen (2202) eines PDCCH, der in einem CORESET in dem CORESET-Pool, der durch die CORESET-Pool-ID angezeigt wird, getragen wird, wobei der PDCCH DCI umfasst, in denen das DCI-Übertragungskonfigurationsfeld auf einen bestimmten Codepunkt aus der Vielzahl von Codepunkten für das DCI-Übertragungskonfigurationsfeld festgelegt ist; und
• Bestimmen (2204) eines TCI-Zustands aus dem einen oder den mehreren TCI-Zuständen, die durch das MAC-CE aktiviert werden, das für einen PDSCH, der durch die DCI basierend auf den Informationen, die in den DCI umfasst sind, geplant wird, verwendet wird.

2. Verfahren nach Anspruch 1, wobei X = 1.

3. Verfahren nach Anspruch 1, wobei X = 2.

4. Verfahren nach einem der Ansprüche 1 bis 3, wobei der PDSCH, der durch die DCI geplant wird, Teil einer mehrfachen PDSCH-Übertragung, die auf mehrfachen PDCCHs basiert, ist.

5. Verfahren nach einem der Ansprüche 1 bis 4, ferner umfassend Empfangen (2206) des PDSCH, der durch die DCI geplant wird.

6. Computerlesbares Medium (2604), umfassend Codeabschnitte, die, wenn sie auf einem Prozessor (2602) ausgeführt werden, den Prozessor dazu konfigurieren, das Verfahren nach einem der Ansprüche 1 bis 5 durchzuführen.

7. Drahtlose Kommunikationsvorrichtung (1112, 2600) für ein zellulares Kommunikationssystem (1100), wobei die drahtlose Kommunikationsvorrichtung (1112, 2600) zu Folgendem angepasst ist:
• Empfangen (2200), von einem Netzwerkknoten, eines Medienzugriffsteuerungs-Steuerelements, MAC-CE, zur Übertragungskonfigurationsanzeige-Zustandsaktivierung oder -deaktivierung, TCI-Zustandsaktivierung oder -deaktivierung, wobei das MAC-CE Folgendes umfasst:
o Informationen, die:
▪ einen oder mehrere TCI-Zustände aktivieren;
▪ einen Codepunkt für eine TCI-Zustandszuordnung definieren, wobei der Codepunkt für eine TCI-Zustandszuordnung jeden einer Vielzahl von Codepunkten für ein Übertragungskonfigurationsanzeigefeld für Downlink-Steuerinformationen, DCI-Übertragungskonfigurationsanzeigefeld, höchstens X des einen oder der mehreren TCI-Zustände, die durch das MAC-CE aktiviert werden, zuordnet, wobei X eine ganze Zahl größer als oder gleich 1 ist; und
o eine Steuerressourcensatz-Poolkennung, CORESET-Pool-ID, die anzeigt, dass der eine oder die mehreren TCI-Zustände, die durch das MAC-CE aktiviert werden, und der Codepunkt für eine TCI-Zustandszuordnung, der durch die Informationen, die in dem MAC-CE umfasst sind, definiert wird, auf einen physikalischen Downlink-Steuerkanal, PDCCH, anzuwenden sind, der in einem beliebigen CORESET in einem CORESET-Pool, der durch die CORESET-Pool-ID angezeigt wird, getragen wird;
• Empfangen (2202) eines PDCCH, der in einem CORESET in dem CORESET-Pool, der durch die CORESET-Pool-ID angezeigt wird, getragen wird, wobei der PDCCH DCI umfasst, in denen das DCI-Übertragungskonfigurationsfeld auf einen bestimmten Codepunkt aus der Vielzahl von Codepunkten für das DCI-Übertragungskonfigurationsfeld festgelegt ist; und
• Bestimmen (2204) eines TCI-Zustands aus dem einen oder den mehreren TCI-Zuständen, die durch das MAC-CE aktiviert werden, das für einen PDSCH, der durch die DCI basierend auf den Informationen, die in den DCI umfasst sind, geplant wird, verwendet wird.

8. Drahtlose Kommunikationsvorrichtung (1112, 2600) nach Anspruch 9, wobei die drahtlose Kommunikationsvorrichtung (1112, 2600) ferner dazu angepasst ist, das Verfahren nach einem der Ansprüche 2 bis 5 durchzuführen.

9. Verfahren, durchgeführt durch einen Netzwerkknoten (2300) in einem zellularen Kommunikationssystem (1100), wobei das Verfahren Folgendes umfasst:
• Übertragen oder Initiieren (2200) einer Übertragung, an eine drahtlose Kommunikationsvorrichtung (1112, 2600), eines Medienzugriffsteuerungs-Steuerelements, MAC-CE, zur Übertragungskonfigurationsanzeige-Zustandsaktivierung oder -deaktivierung, TCI-Zustandsaktivierung oder -deaktivierung, wobei das MAC-CE Folgendes umfasst:
o Informationen, die:
▪ einen oder mehrere TCI-Zustände aktivieren;
▪ einen Codepunkt für eine TCI-Zustandszuordnung definieren, wobei der Codepunkt für eine TCI-Zustandszuordnung jeden einer Vielzahl von Codepunkten für ein Übertragungskonfigurationsanzeigefeld für Downlink-Steuerinformationen, DCI-Übertragungskonfigurationsanzeigefeld, höchstens X des einen oder der mehreren TCI-Zustände, die durch das MAC-CE aktiviert werden, zuordnet, wobei X eine ganze Zahl größer als oder gleich 1 ist; und
o eine Steuerressourcensatz-Poolkennung, CORESET-Pool-ID, die anzeigt, dass der eine oder die mehreren TCI-Zustände, die durch das MAC-CE aktiviert werden, und der Codepunkt für eine TCI-Zustandszuordnung, der durch die Informationen, die in dem MAC-CE umfasst sind, definiert wird, auf einen physikalischen Downlink-Steuerkanal, PDCCH, anzuwenden sind, der in einem beliebigen CORESET in einem CORESET-Pool, der durch die CORESET-Pool-ID angezeigt wird, getragen wird;
• Übertragen oder Initiieren (2202) einer Übertragung eines PDCCH, der in einem CORESET in dem CORESET-Pool, der durch die CORESET-Pool-ID angezeigt wird, getragen wird, an die drahtlose Kommunikationsvorrichtung (11112, 2600), wobei der PDCCH DCI umfasst, in denen das DCI-Übertragungskonfigurationsfeld auf einen bestimmten Codepunkt aus der Vielzahl von Codepunkten für das DCI-Übertragungskonfigurationsfeld festgelegt ist.

10. Verfahren nach Anspruch 9, wobei
X = 1; oder
X = 2.

11. Verfahren nach Anspruch 9 oder 10, wobei der PDSCH, der durch die DCI geplant wird, Teil einer mehrfachen PDSCH-Übertragung, die auf mehrfachen PDCCHs basiert, ist.

12. Verfahren nach Anspruch 9 oder 11, ferner umfassend Übertragen oder Initiieren (2206) einer Übertragung des PDSCH, der durch die DCI geplant wird.

13. Computerlesbares Medium (2306), umfassend Codeabschnitte, die, wenn sie auf einem Prozessor (2304) ausgeführt werden, den Prozessor dazu konfigurieren, das Verfahren nach einem der Ansprüche 9 bis 12 durchzuführen.

14. Netzwerkknoten (2300) für ein zellulares Kommunikationssystem (1100), wobei der Netzwerkknoten zu Folgendem angepasst ist:
• Übertragen oder Initiieren (2200) einer Übertragung, an eine drahtlose Kommunikationsvorrichtung (1112, 2600), eines Medienzugriffsteuerungs-Steuerelements, MAC-CE, zur Übertragungskonfigurationsanzeige-Zustandsaktivierung oder -deaktivierung, TCI-Zustandsaktivierung oder -deaktivierung, wobei das MAC-CE Folgendes umfasst:
o Informationen, die:
▪ einen oder mehrere TCI-Zustände aktivieren;
▪ einen Codepunkt für eine TCI-Zustandszuordnung definieren, wobei der Codepunkt für eine TCI-Zustandszuordnung jeden einer Vielzahl von Codepunkten für ein Übertragungskonfigurationsanzeigefeld für Downlink-Steuerinformationen, DCI-Übertragungskonfigurationsanzeigefeld, höchstens X des einen oder der mehreren TCI-Zustände, die durch das MAC-CE aktiviert werden, zuordnet, wobei X eine ganze Zahl größer als oder gleich 1 ist; und
o eine Steuerressourcensatz-Poolkennung, CORESET-Pool-ID, die anzeigt, dass der eine oder die mehreren TCI-Zustände, die durch das MAC-CE aktiviert werden, und der Codepunkt für eine TCI-Zustandszuordnung, der durch die Informationen, die in dem MAC-CE umfasst sind, definiert wird, auf einen physikalischen Downlink-Steuerkanal, PDCCH, anzuwenden sind, der in einem beliebigen CORESET in einem CORESET-Pool, der durch die CORESET-Pool-ID angezeigt wird, getragen wird;
• Übertragen oder Initiieren (2202) einer Übertragung eines PDCCH, der in einem CORESET in dem CORESET-Pool, der durch die CORESET-Pool-ID angezeigt wird, getragen wird, an die drahtlose Kommunikationsvorrichtung (11112, 2600), wobei der PDCCH DCI umfasst, in denen das DCI-Übertragungskonfigurationsfeld auf einen bestimmten Codepunkt aus der Vielzahl von Codepunkten für das DCI-Übertragungskonfigurationsfeld festgelegt ist.

15. Netzwerkknoten nach Anspruch 14, wobei der Netzwerkknoten ferner dazu angepasst ist, das Verfahren nach einem der Ansprüche 10 bis 12 durchzuführen.

## Revendications

1. Procédé mis en œuvre par un dispositif de communication sans fil (1112, 2600) dans un système de communications cellulaires (1100), le procédé comprenant :
• la réception (2200), en provenance d'un nœud de réseau (2300), d'un élément de commande, CE, de commande d'accès au support, MAC, pour l'activation ou la désactivation d'un état d'indication de configuration de transmission, TCI, le CE MAC comprenant :
o des informations qui :
▪ activent un ou plusieurs états de TCI ;
▪ définissent une mise en correspondance de point de code à un état de TCI, dans lequel la mise en correspondance de point de code à un état de TCI met en correspondance chacun d'une pluralité de points de code pour un champ d'indication de configuration de transmission d'informations de commande de liaison descendante (DCI) à au plus X de l'un ou plusieurs états de TCI activés par le CE MAC, où X est un entier supérieur ou égal à 1 ; et
o une identité de pool, ID, d'ensemble de ressource de commande, CORESET, qui indique que l'un ou plusieurs états de TCI activés par le CE MAC et la mise en correspondance de point de code à un état de TCI défini par les informations comprises dans le CE MAC doivent être appliqués à un canal de commande de liaison physique descendante, PDCCH, qui est transporté dans un quelconque CORESET dans un pool de CORESET indiqué par l'ID de pool de CORESET ;
• la réception (2202) d'un PDCCH transporté dans un CORESET dans le pool de CORESET indiqué par l'ID de pool de CORESET, le PDCCH comprenant un DCI dans lequel le champ de configuration de transmission de DCI est défini sur un point de code particulier parmi la pluralité de points de code pour le champ de configuration de transmission de DCI ; et
• la détermination (2204) d'un état de TCI parmi l'un ou plusieurs états de TCI activés par le CE MAC utilisé pour un PDSCH planifié par le DCI sur la base des informations comprises dans le DCI.

2. Procédé selon la revendication 1 dans lequel X=1.

3. Procédé selon la revendication 1 dans lequel X=2.

4. Procédé selon l'une quelconque des revendications 1 à 3, dans lequel le PDSCH planifié par la DCI fait partie d'une transmission multi-PDSCH basée sur de multiples PDCCH.

5. Procédé selon l'une quelconque des revendications 1 à 4, comprenant en outre la réception (2206) du PDSCH planifié par la DCI.

6. Support lisible par ordinateur (2604) comprenant des parties de code qui, lorsqu'elles sont exécutées sur un processeur (2602), configurent le processeur pour exécuter le procédé selon l'une quelconque des revendications 1 à 5**.**

7. Dispositif de communication sans fil (1112, 2600) pour un système de communications cellulaires (1100), le dispositif de communication sans fil (1112, 2600) étant adapté pour :
• recevoir (2200), depuis un nœud de réseau, un élément de commande, CE, de commande d'accès au support (MAC), pour l'activation ou la désactivation d'état d'indication de configuration de transmission, TCI, le CE MAC comprenant :
∘ des information qui :
▪ activent un ou plusieurs états de TCI ;
▪ définissent une mise en correspondance de point de code à un état de TCI, dans lequel la mise en correspondance de point de code à un état de TCI met en correspondance chacun d'une pluralité de points de code pour un champ d'indication de configuration de transmission d'informations de commande à liaison descendante, DCI, à au plus X de l'un ou plusieurs états de TCI activés par le CE MAC, où X est un entier supérieur ou égal à 1 ; et
o une identité de pool, ID, d'ensemble de ressource de commande, CORESET, qui indique que l'un ou plusieurs états de TCI activés par le CE MAC et la mise en correspondance de point de code à un état de TCI défini par les informations comprises dans le CE MAC doivent être appliqués à un canal de commande à liaison physique descendante, PDCCH, qui est porté dans un quelconque CORESET dans un pool de CORESET indiqué par l'ID de pool de CORESET ;
• recevoir (2202) un PDCCH porté dans un CORESET dans le pool de CORESET indiqué par l'ID de pool de CORESET, le PDCCH comprenant un DCI dans lequel le champ de configuration de transmission de DCI est défini sur un point de code particulier parmi la pluralité de points de code pour le champ de configuration de transmission de DCI ; et
• déterminer (2204) un état de TCI parmi l'un ou plusieurs états de TCI activés par le CE MAC utilisé pour un PDSCH planifié par le DCI sur la base des informations comprises dans le DCI.

8. Dispositif de communication sans fil (1112, 2600) selon la revendication 9, dans lequel le dispositif de communication sans fil (1112, 2600) est en outre adapté pour mettre en œuvre le procédé selon l'une quelconque des revendications 2 à 5.

9. Procédé mis en œuvre par un nœud de réseau (2300) dans un système de communications cellulaires (1100), le procédé comprenant :
• la transmission ou l'initiation (2200) de la transmission, à un dispositif de communication sans fil (1112, 2600), d'un élément de commande, CE, de commande d'accès au support, MAC, pour l'activation ou la désactivation de l'état d'indication de configuration de transmission, TCI, le CE MAC comprenant :
∘ des informations qui :
▪ activent un ou plusieurs états de TCI ;
▪ définissent une mise en correspondance de point de code à un état de TCI, dans lequel la mise en correspondance de point de code à état de TCI met en correspondance chacun d'une pluralité de points de code pour un champ d'indication de configuration de transmission d'information de commande de liaison descendante, DCI, à au plus X parmi l'un ou plusieurs états de TCI activés par le CE MAC, où X est un entier supérieur ou égal à 1 ; et
o une identité de pool, ID, d'ensemble de ressource de commande, CORESET, qui indique que l'un ou plusieurs états de TCI activés par le CE MAC et la mise en correspondance de point de code à un état de TCI défini par les informations comprises dans le CE MAC doivent être appliqués à un canal de commande de liaison physique descendante, PDCCH, porté dans un quelconque CORESET dans un pool de CORESET indiqué par l'ID de pool de CORESET ; et
• la transmission ou l'initiation (2202) de la transmission d'un PDCCH porté dans un CORESET dans le pool de CORESET indiqué par l'ID de pool de CORESET au dispositif de communication sans fil (1112, 2600), le PDCCH comprenant un DCI dans lequel le champ de configuration de transmission de DCI est défini sur un point de code particulier parmi la pluralité de points de code pour le champ de configuration de transmission de DCI.

10. Procédé selon la revendication 9 dans lequel
X=1 ; ou
X=2.

11. Procédé selon la revendication 9 ou 10, dans lequel le PDSCH planifié par la DCI fait partie d'une transmission multi-PDSCH basée sur de multiples PDCCH.

12. Procédé selon la revendication 9 ou 11, comprenant en outre la transmission ou l'initiation de la transmission (2206) du PDSCH planifié par la DCI.

13. Support lisible par ordinateur (2306) comprenant des parties de code qui, lorsqu'elles sont exécutées sur un processeur (2304), configurent le processeur pour mettre en œuvre le procédé selon l'une quelconque des revendications 9 à 12.

14. Nœud de réseau (2300) pour un système de communications cellulaire (1100), le nœud de réseau adapté pour :
• transmettre ou initier (2200) la transmission, à un dispositif de communication sans fil (1112, 2600), d'un élément de commande, CE, de commande d'accès au support, MAC, pour l'activation ou la désactivation d'un état d'indication de configuration de transmission, TCI, le CE MAC comprenant :
∘ des informations qui :
▪ activent un ou plusieurs états de TCI ;
▪ définissent une mise en correspondance de point de code à un état de TCI, dans lequel la mise en correspondance de point de code à un état de TCI met en correspondance chacun d'une pluralité de points de code pour un champ d'indication de configuration de transmission d'informations de commande de liaison descendante, DCI, à au plus X parmi l'un ou plusieurs états de TCI activés par le CE MAC, où X est un entier supérieur ou égal à 1 ; et
o une identité de pool, ID, d'ensemble de ressource de commande, CORESET, qui indique que l'un ou plusieurs états de TCI activés par le CE MAC et la mise en correspondance de point de code à l'état de TCI défini par les informations comprises dans le CE MAC doivent être appliqués à un canal de commande de liaison descendante physique, PDCCH, porté dans un quelconque CORESET dans un pool de CORESET indiqué par l'ID de pool de CORESET ; et
• transmettre ou initier (2202) la transmission d'un PDCCH porté dans un CORESET dans le pool de CORESET indiqué par l'ID de pool de CORESET au dispositif de communication sans fil (1112, 2600), le PDCCH comprenant un DCI dans lequel le champ de configuration de transmission de DCI est défini sur un point de code particulier parmi la pluralité de points de code pour le champ de configuration de transmission de DCI.

15. Nœud de réseau selon la revendication 14, dans lequel le nœud de réseau est en outre adapté pour mettre en œuvre le procédé selon l'une quelconque des revendications 10 à 12.
